(19) Europäisches Patentamt
European Patent Office
Office européen des brevets

(11) **EP 4 737 254 A1**

(12) **EUROPÄISCHE PATENTANMELDUNG**

(43) Veröffentlichungstag:
**06.05.2026  Patentblatt 2026/19**

(21) Anmeldenummer: **25208460.3**

(22) Anmeldetag: **14.10.2025**

(51) Internationale Patentklassifikation (IPC):
**B60W 60/00** (2020.01)

(52) Gemeinsame Patentklassifikation (CPC):
**B60W 60/00; B60W 30/025; B60W 50/082;
B60W 60/0013; B60W 60/0015;** B60W 2540/01;
B60W 2540/043; B60W 2552/05; B60W 2552/40

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **31.10.2024  CN 202411545166**

(71) Anmelder: **ZF Friedrichshafen AG
88046 Friedrichshafen (DE)**

(72) Erfinder:
• **Luo, Zheng
88046 Friedrichshafen (DE)**
• **Wang, Xiandong
88046 Friedrichshafen (DE)**
• **Ormankiran, Mesut
41469 Neuss (DE)**
• **Fang, Gaoming
88046 Friedrichshafen (DE)**

(74) Vertreter: **ZF Friedrichshafen AG
Gewerblicher Rechtsschutz
Löwentalerstraße 20
88046 Friedrichshafen (DE)**

(54) **VERFAHREN UND EINRICHTUNG ZUR BESTIMMUNG VON ZIELTRAJEKTORIENBESCHRÄNKUNGEN EINES FAHRZEUGS, GERÄT SOWIE SPEICHERMEDIUM**

(57)    Die Ausführungsbeispiele der vorliegenden Anmeldung stellen ein Verfahren und eine Einrichtung zur Bestimmung von Zieltrajektorienbeschränkungen eines Fahrzeugs, ein Gerät und ein Speichermedium bereit. Das Verfahren umfasst: Berechnen von Potenzialen mehrerer Aktuatoren des Fahrzeugs basierend auf einem Straßenoberflächenhaftungskoeffizienten und Umwandeln des jeweiligen Potenzials in das dynamische Potenzial des gesamten Fahrzeugs, um dynamische Trajektorienbeschränkungsinformationen für das Fahrzeug zu erhalten, Bestimmen von Komfort-Trajektorienbeschränkungsinformationen des Fahrzeugs basierend auf Straßenoberflächen- und Hindernisinformationen sowie Fahrzeuginsassen-Identifikationsinformationen, und Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten. Unter umfassender Berücksichtigung von Faktoren wie der Dynamik des Fahrwerks des Fahrzeugs, der Komfortanforderung und der Komplexität der Fahrumgebung wird durch das oben beschriebene Verfahren eine genaue Beschränkung und Anpassung der Fahrtrajektorie des Fahrzeugs ermöglicht. Dadurch werden nicht nur die Sicherheit und die Stabilität beim Fahren erhöht, sondern auch der Fahrkomfort und das Fahrterlebnis der Passagiere werden optimiert. Gleichzeitig werden das Intelligenzniveau des autonomen Fahrsystems, die Betriebseffizienz und die Energieeffizienz des Fahrzeugs verbessert.

```
Berechnen von Potenzialen mehrerer Aktuatoren des        S201
Fahrzeugs basierend auf einem vorbestimmten
Straßenoberflächenhaftungskoeffizienten

Umwandeln des Potenzials jedes Aktuators in das          S202
dynamische Potenzial des gesamten Fahrzeugs, um
dynamische Trajektorienbeschränkungsinformationen für
das Fahrzeug zu erhalten

Bestimmen von Komfort-Trajektorienbeschränkungsinformationen   S203
des Fahrzeugs basierend auf vorab ermittelten
Straßenoberflächen- und Hindernisinformationen sowie
Fahrzeuginsassen-Identifikationsinformationen

Fusionieren und Verarbeiten der dynamischen              S204
Trajektorienbeschränkungsinformationen und der Komfort-
Trajektorienbeschränkungsinformationen, um Informationen über die
Zieltrajektorienbeschränkungen des Fahrzeugs zu erhalten
```

Fig. 2

## Beschreibung

### Technisches Gebiet

Die vorliegende Anmeldung bezieht sich auf das Gebiet des autonomen Fahrens der Fahrzeuge, insbesondere auf ein Verfahren und eine Einrichtung zur Bestimmung von Zieltrajektorienbeschränkungen eines Fahrzeugs, ein Gerät und ein Speichermedium.

### Stand der Technik

Mit dem technologischen Fortschritt bringt die Technologie des autonomen Fahrens mehr Bequemlichkeit und Sicherheit für die Menschen im Straßenverkehr. Die Bestimmung von Zieltrajektorienbeschränkungen ist eine einer der kritischen Aspekte in der Technologie des autonomen Fahrens. Dabei bezieht es sich darauf, wie die Autos im autonomen Fahrbetrieb eine optimale Fahrtrajektorie in Abhängigkeit von der Straßenumgebung, den Verkehrsregeln und dem Fahrzeugszustand usw. bestimmen. Diese Technologie stammt vor allem von der Suche nach verbesserter Sicherheit und Komfort beim autonomen Fahren der Autos. Durch die genaue Bestimmung der Zieltrajektorienbeschränkungen können sich autonome Autos besser an komplexe Verkehrsumgebungen anpassen, um somit die Stabilität und Sicherheit beim Fahren zu erhöhen.

Im Stand der Technik handelt es sich bei einer Zieltrajektorie und deren Beschränkung beim autonomen Fahren in der Regel um eine Beschränkung der Bestimmung der Zieltrajektorie basierend auf der Kinematik und den Hindernisfaktoren.

Die Beschränkungsbedingung im oben genannten Verfahren ist jedoch begrenzt und relativ monoton, sodass keine intelligente Anpassung der Trajektorie möglich ist, was zu einem schlechten Fahrerlebnis für den Fahrer führt.

### Offenbarung der Erfindung

Die Ausführungsbeispiele der vorliegenden Anmeldung stellen ein Verfahren und eine Einrichtung zur Bestimmung von Zieltrajektorienbeschränkungen eines Fahrzeugs, ein Gerät und ein Speichermedium bereit, um damit das Problem im Stand der Technik zu lösen, dass eine intelligente Anpassung der Trajektorie aufgrund der Begrenzung bei der Beschränkung einer Fahrzeugstrajektorie nicht realisiert werden kann.

Gemäß einem ersten Aspekt stellt ein Ausführungsbeispiel der vorliegenden Anmeldung ein Verfahren zur Bestimmung von Zieltrajektorienbeschränkungen eines Fahrzeugs bereit, das umfasst:

Berechnen von Potenzialen mehrerer Aktuatoren des Fahrzeugs basierend auf einem vorbestimmten Straßenoberflächenhaftungskoeffizienten;
Umwandeln des Potenzials jedes Aktuators in das dynamische Potenzial des gesamten Fahrzeugs, um dynamische Trajektorienbeschränkungsinformationen für das Fahrzeug zu erhalten;
Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen; und
Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten.

In einer möglichen Ausführungsform ist vorgesehen, dass das Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen umfasst:

Bestimmen eines Komfortsteuermodus gemäß den Fahrzeuginsassen-Identifikationsinformationen; und
Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus.

In einer möglichen Ausführungsform ist vorgesehen, dass das Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus umfasst:

Bestimmen von Komfort-Straßenoberflächenbeschränkungsinformationen basierend auf den Straßenoberflächeninformationen;
Bestimmen von Komfort-Hindernisbeschränkungsinformationen basierend auf den Hindernisinformationen;
Bestimmen eines Korrekturfaktors gemäß dem Komfortsteuermodus; und
Fusionieren und Korrigieren der Komfort-Straßenoberflächenbeschränkungsinformationen und der Komfort-Hindernisbeschränkungsinformationen durch einen Fuzzy-Regelungsalgorithmus basierend auf dem Korrekturfaktor, um die Komfort-Trajektorienbeschränkungsinformationen zu erhalten.

In einer möglichen Ausführungsform ist vorgesehen, dass die mehreren Aktuatoren einen Antriebsaktuator, einen Bremsaktuator, einen Lenkaktuator und einen Aufhängungsaktuator umfasst, so dass das Berechnen von Potenzialen mehrerer Aktuatoren des Fahrzeugs basierend auf einem vorbestimmten Straßenoberflächenhaftungskoeffizienten umfasst:

Berechnen eines Potenzials des Antriebsaktuators basierend auf einem Straßenoberflächenhaftungskoeffizienten;

Berechnen eines Potenzials des Bremsaktuators basierend auf einem Straßenoberflächenhaftungskoeffizienten;

Berechnen eines Potenzials des Lenkaktuators basierend auf einem Straßenoberflächenhaftungskoeffizienten; und

Berechnen eines Potenzials des Aufhängungsaktuators basierend auf einem Straßenoberflächenhaftungskoeffizienten.

In einer möglichen Ausführungsform ist vorgesehen, dass das Bestimmen eines Komfortsteuermodus gemäß den Fahrzeuginsassen-Identifikationsinformationen umfasst:

Bestimmen eines Kindermodus als Komfortsteuermodus, wenn die Fahrzeuginsassen-Identifikationsinformationen anzeigen, dass die Fahrzeuginsassen ein Kind umfassen;

Bestimmen eines Seniorenmodus als Komfortsteuermodus, wenn die Fahrzeuginsassen-Identifikationsinformationen anzeigen, dass die Fahrzeuginsassen kein Kind und aber einen Senioren umfassen;

Bestimmen eines Passagiermodus als Komfortsteuermodus, wenn die Fahrzeuginsassen-Identifikationsinformationen anzeigen, dass die Fahrzeuginsassen einen Passagier und aber kein Kind und keinen Senioren umfassen; und

Bestimmen eines Fahrermodus als Komfortsteuermodus basierend auf Informationen über die Merkmale des Fahrers, wenn die Fahrzeuginsassen-Identifikationsinformationen anzeigen, dass die Fahrzeuginsassen nur den Fahrer umfassen, wobei es sich bei dem Fahrermodus um einen ersten Fahrermodus, einen zweiten Fahrermodus oder einen dritten Fahrermodus handelt, und wobei der erste Fahrermodus, der zweite Fahrermodus und der dritte Fahrermodus verschiedene Fahrpräferenzen charakterisieren.

In einer möglichen Ausführungsform ist vorgesehen, dass das Verfahren ferner umfasst:
Bestimmen eines vom Fahrer festgelegten Steuermodus als Komfortsteuermodus, wenn vorab ermittelte HMI-Informationen anzeigen, dass der Fahrer den Steuermodus festgelegt hat.

In einer möglichen Ausführungsform ist vorgesehen, dass die Informationen über die Zieltrajektorienbeschränkungen Maximal- und Minimalwerte der folgenden Größen in beliebiger Kombination umfassen: die Längsbeschleunigung, die Veränderungsrate der Längsbeschleunigung, die Querbeschleunigung, die Veränderungsrate der Querbeschleunigung, die Krümmung einer Zieltrajektorie, die Veränderungsrate der Krümmung einer Zieltrajektorie, die Fahrgeschwindigkeit, die Vertikalbeschleunigung der Karosserie, die Veränderungsrate der Vertikalbeschleunigung der Karosserie, die Giergeschwindigkeit, die Veränderungsrate der Giergeschwindigkeit, die Nickgeschwindigkeit, die Veränderungsrate der Nickgeschwindigkeit, die Wankgeschwindigkeit und die Veränderungsrate der Wankgeschwindigkeit.

Gemäß einem zweiten Aspekt stellt ein Ausführungsbeispiel der vorliegenden Anmeldung ein Verfahren zur Bestimmung einer Zieltrajektorie eines Fahrzeugs bereit, das umfasst:
Beschränken und Anpassen einer geplanten ursprünglichen Trajektorie gemäß den Informationen über die Zieltrajektorienbeschränkungen, um die Zieltrajektorie zu erhalten, wobei die Informationen über die Zieltrajektorienbeschränkungen durch den ersten Aspekt und/oder verschiedene mögliche Ausführungsformen des ersten Aspekts bestimmt sind.

Gemäß einem dritten Aspekt stelltein Ausführungsbeispiel der vorliegenden Anmeldung eine Einrichtung zur Bestimmung von Zieltrajektorienbeschränkungen eines Fahrzeugs bereit, die umfasst:

ein Berechnungsmodul, das dazu dient, Potenziale mehrerer Aktuatoren des Fahrzeugs basierend auf einem vorbestimmten Straßenoberflächenhaftungskoeffizienten zu berechnen;

ein Umwandlungsmodul, das dazu dient, das Potenzial jedes Aktuators in das dynamische Potenzial des gesamten Fahrzeugs umzuwandeln, um dynamische Trajektorienbeschränkungsinformationen für das Fahrzeug zu erhalten;

ein Bestimmungsmodul, das dazu dient, Komfort-Trajektorienbeschränkungsinformationen des Fahrzeugs basierend auf vorab ermittelten Straßenoberflächen- und Hindernisinformationen sowie Fahrzeuginsassen-Identifikationsinformationen zu bestimmen;

und ein Fusionsmodul, das dazu dient, die dynamischen Trajektorienbeschränkungsinformationen und die Komfort-Trajektorienbeschränkungsinformationen zu fusionieren und zu verarbeiten, um Informationen über die Zieltrajektorienbeschränkungen des Fahrzeugs zu erhalten.

Gemäß einem vierten Aspekt stellt ein Ausführungsbeispiel der vorliegenden Anmeldung eine Einrichtung zur Bestimmung einer Zieltrajektorie eines Fahrzeugs bereit, die umfasst:
ein Anpassungsmodul, das dazu dient, eine geplante ursprüngliche Trajektorie gemäß den Informationen über die Zieltrajektorienbeschränkungen zu beschränken und anzupassen, um die Zieltrajektorie zu erhalten, wobei die Informationen über die Zieltrajektorienbeschränkungen durch den ersten Aspekt und/oder verschiedene mögliche Ausführungsformen des ersten Aspekts bestimmt sind.

Gemäß einem fünften Aspekt stellt ein Ausführungsbeispiel der vorliegenden Anmeldung ein elektronisches Gerät bereit, das umfasst: einen Speicher und einen Prozessor,

bzw. einen Prozessor und einen mit dem Prozessor in Kommunikationsverbindung stehenden Speicher, wobei in dem Speicher computerausführbare Anweisungen gespeichert sind,
und wobei der Prozessor die computerausführbaren Anweisungen, die im Speicher gespeichert sind, ausführt, so dass der Prozessor den obigen ersten Aspekt und/oder die verschiedenen möglichen Ausführungsformen des ersten Aspekts und die Ausführungsformen des zweiten Aspekts ausführt.

Gemäß einem sechsten Aspekt stellt ein Ausführungsbeispiel der vorliegenden Anmeldung ein computerlesbares Speichermedium bereit, in dem computerausführbare Anweisungen gespeichert sind, die bei deren Ausführen durch einen Prozessor dazu verwendet wird, den obigen ersten Aspekt und/oder die verschiedenen möglichen Ausführungsformen des ersten Aspekts und die Ausführungsformen des zweiten Aspekts zu implementieren.

Gemäß einem siebten Aspekt stellt ein Ausführungsbeispiel der vorliegenden Anmeldung ein Computerprogrammprodukt, umfassend ein Computerprogramm, bereit, das beim Ausführen durch einen Prozessor den obigen ersten Aspekt und/oder die verschiedenen möglichen Ausführungsformen des ersten Aspekts und die Ausführungsformen des zweiten Aspekts implementiert.

Das Verfahren und die Einrichtung zur Bestimmung von Zieltrajektorienbeschränkungen eines Fahrzeugs, das Gerät und das Speichermedium nach den Ausführungsbeispielen der vorliegenden Anmeldung umfassen die Folgenden: Berechnen von Potenzialen mehrerer Aktuatoren des Fahrzeugs basierend auf einem vorbestimmten Straßenoberflächenhaftungskoeffizienten; Umwandeln des Potenzials jedes Aktuators in das dynamische Potenzial des gesamten Fahrzeugs, um dynamische Trajektorienbeschränkungsinformationen für das Fahrzeug zu erhalten; Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen; Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten; und Beschränken und Anpassen einer Fahrtrajektorie des Fahrzeugs gemäß den Informationen über die Zieltrajektorienbeschränkungen, um die Zieltrajektorie zu erhalten. Unter umfassender Berücksichtigung von Faktoren wie der Dynamik des Fahrwerks des Fahrzeugs, der Komfortanforderung und der Komplexität der Fahrumgebung wird durch das oben beschriebene Verfahren eine genaue Beschränkung und Anpassung der Fahrtrajektorie des Fahrzeugs ermöglicht. Dadurch werden nicht nur die Sicherheit und die Stabilität beim Fahren erhöht, sondern auch der Fahrkomfort und das Fahrterlebnis der Passagiere werden optimiert. Gleichzeitig werden das Intelligenzniveau des autonomen Fahrsystems, die Betriebseffizienz und die Energieeffizienz des Fahrzeugs verbessert.

**Kurzbeschreibung der Figuren**

Die Zeichnungen hierin sind in die Beschreibung aufgenommen und bilden einen Teil dieser Beschreibung. Dabei zeigen sie die der vorliegenden Anmeldung entsprechenden Ausführungsbeispiele und dienen zusammen mit der Beschreibung zur Erläuterung der Prinzipien der vorliegenden Anmeldung.

Fig. 1 zeigt eine schematische Darstellung einer Modellarchitektur eines Anwendungssystems für ein Verfahren zur Bestimmung von Zieltrajektorienbeschränkungen eines Fahrzeugs der vorliegenden Anmeldung;
Fig. 2 zeigt ein erstes schematisches Flussdiagramm des Verfahrens zur Bestimmung von Zieltrajektorienbeschränkungen eines Fahrzeugs der vorliegenden Anmeldung;
Fig. 3 zeigt ein erstes schematisches Flussdiagramm des Verfahrens zur Bestimmung einer Zieltrajektorie eines Fahrzeugs der vorliegenden Anmeldung;
Fig. 4 zeigt ein zweites schematisches Flussdiagramm des Verfahrens zur Bestimmung von Zieltrajektorienbeschränkungen eines Fahrzeugs der vorliegenden Anmeldung;
Fig. 5 zeigt ein drittes schematisches Flussdiagramm des Verfahrens zur Bestimmung von Zieltrajektorienbeschränkungen eines Fahrzeugs der vorliegenden Anmeldung;
Fig. 6 zeigt ein viertes schematisches Flussdiagramm des Verfahrens zur Bestimmung von Zieltrajektorienbeschränkungen eines Fahrzeugs der vorliegenden Anmeldung;
Fig. 7 zeigt ein fünftes schematisches Flussdiagramm des Verfahrens zur Bestimmung von Zieltrajektorienbeschränkungen eines Fahrzeugs der vorliegenden Anmeldung;
Fig. 8 zeigt eine schematische Strukturdarstellung einer Einrichtung zur Bestimmung von Zieltrajektorienbeschränkungen eines Fahrzeugs der vorliegenden Anmeldung;
Fig. 9 zeigt eine schematische Strukturdarstellung einer Einrichtung zur Bestimmung einer Zieltrajektorie eines Fahrzeugs der vorliegenden Anmeldung; und

Fig. 10 zeigt eine schematische Strukturdarstellung eines elektronischen Geräts der vorliegenden Anmeldung.

In den obigen Zeichnungen sind konkrete Ausführungsbeispiele der vorliegenden Anmeldung dargestellt. Im Folgenden werden diese noch näher beschrieben. Die Zeichnungen und Texte hierhin dienen nicht dazu, den Umfang der Idee der vorliegenden Anmeldung in irgendeiner Weise einzuschränken, sondern dazu, den Fachleuten auf diesem Gebiet den Kontext der vorliegenden Anmeldung unter Bezugnahme auf spezifische Ausführungsbeispiele der vorliegenden Anmeldung zu erläutern.

**Ausführliche Ausführungsformen**

Nun werden beispielhafte Ausführungsbeispiele im Detail beschrieben, die in den Zeichnungen beispielhaft dargestellt sind. In der nachfolgenden Beschreibung, die sich auf die Zeichnungen bezieht, bezeichnen die gleichen Bezugszeichen in den verschiedenen Zeichnungen die gleichen oder ähnlichen Elemente, sofern nichts anderes angegeben ist. Die in den folgenden Ausführungsbeispielen beschriebenen Ausführungsformen stellen nicht alle mit der vorliegenden Anmeldung übereinstimmenden Ausführungsformen dar. Vielmehr handelt es sich dabei lediglich um Beispiele für die Einrichtungen und Verfahren, die mit einigen, in den beigefügten Ansprüchen beschriebenen Aspekten der vorliegenden Anmeldung übereinstimmen.

Mit dem technologischen Fortschritt bringt die Technologie des autonomen Fahrens mehr Bequemlichkeit und Sicherheit für die Menschen im Straßenverkehr. Die Bestimmung von Zieltrajektorienbeschränkungen ist eine einer der kritischen Aspekte in der Technologie des autonomen Fahrens. Dabei bezieht es sich darauf, wie die Autos im autonomen Fahrbetrieb eine optimale Fahrtrajektorie in Abhängigkeit von der Straßenumgebung, den Verkehrsregeln und dem Fahrzeugszustand usw. bestimmen. Diese Technologie stammt vor allem von der Suche nach verbesserter Sicherheit und Komfort beim autonomen Fahren der Autos. Durch die genaue Bestimmung der Zieltrajektorienbeschränkungen können sich autonome Autos besser an komplexe Verkehrsumgebungen anpassen, um somit die Stabilität und Sicherheit beim Fahren zu erhöhen. Im Stand der Technik handelt es sich bei einer Zieltrajektorie und deren Beschränkung beim autonomen Fahren in der Regel um eine Beschränkung der Bestimmung der Zieltrajektorie basierend auf der Kinematik und den Hindernisfaktoren. Die Beschränkungsbedingung im oben genannten Verfahren ist jedoch begrenzt und relativ monoton, sodass keine intelligente Anpassung der Trajektorie möglich ist, was zu einem schlechten Fahrerlebnis für den Fahrer führt.

Angesichts der oben genannten Probleme werden in der vorliegenden Anmeldung ein Verfahren und eine Einrichtung zur Bestimmung von Zieltrajektorienbeschränkungen eines Fahrzeugs, ein Gerät sowie ein Speichermedium bereitgestellt, durch die eine genauere und flexiblere Bestimmung von Zieltrajektorienbeschränkungen ermöglicht wird, um somit das Fahrerlebnis zu verbessern. Bei der Planung der Zieltrajektorie und deren Beschränkungen im herkömmlichen autonomen Fahrbetrieb werden insbesondere nur die Kinematik und die Hindernisfaktoren berücksichtigt, wobei der Schwerpunkt vor allem auf X- und Y-Richtung liegt. Die Fahrwerksdynamik des Fahrzeugs wird jedoch weniger berücksichtigt, während der Komfort in Z-Richtung ebenfalls nicht ausreichend in die Betrachtung einbezogen wird. Die Zieltrajektorie und die Trajektorienbeschränkungen für das autonome Fahren sind somit relativ momoton, was zu einer mangelnden Individualisierung der Erfahrung und zu einem unzureichenden Fahrtkomfort führt. Infolgedessen hat der Erfinder untersucht, ob sich basierend auf intelligenter Technologie zur Erkennung der Straßenoberfläche das Potenzial jedes Aktuators im Fahrwerk in Echtzeit berechnen und in Beschränkungen für die gesamte Zieltrajektorie des Fahrzeugs umwandeln lassen. Gleichzeitig kann diese Technologie die Fahrmodi, den Zustand der Passagiere im Fahrzeug und die intelligente Mensch-Maschine-Interaktion in Echtzeit intelligent identifizieren, so dass eine intelligente Individualisierung und eine Komfort-Anpassung der Zieltrajektorie in Echtzeit ermöglicht werden. Damit wird nicht nur die volle Ausnutzung der Leistung des gesamten Fahrzeugfahrwerks sichergestellt, sondern auch die Genauigkeit der Zieltrajektorie wird verbessert und der Komfort für verschiedene Passagiere oder Fahrer wird gewährleistet, was das Fahrerlebnis im autonomen Fahren grundlegend verändert.

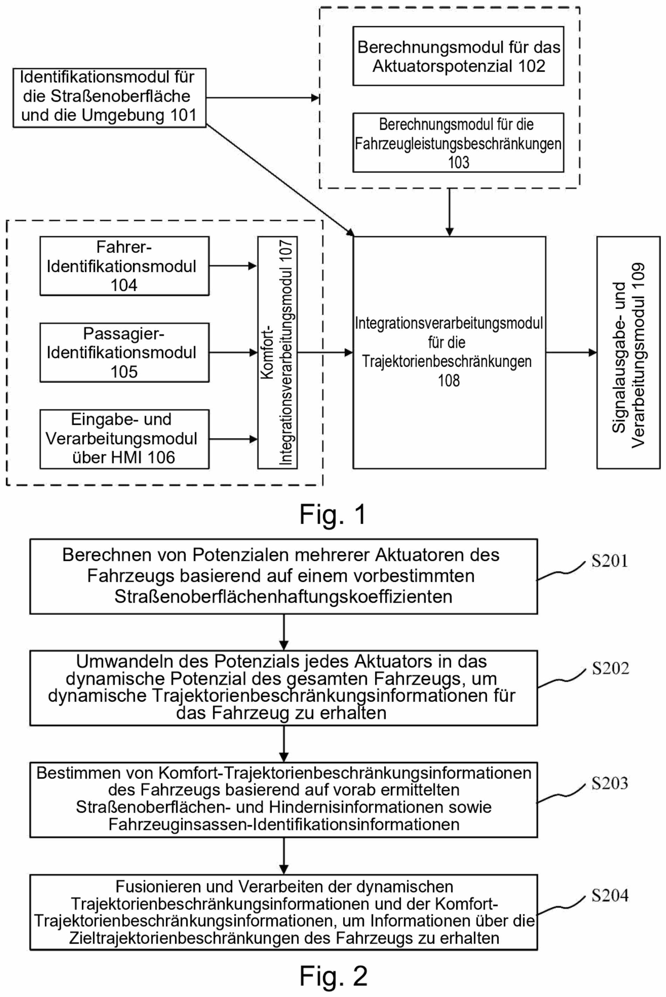

Fig. 1 zeigt eine schematische Darstellung einer Modellarchitektur eines Anwendungssystems für ein Verfahren zur Bestimmung von Zieltrajektorienbeschränkungen eines Fahrzeugs der vorliegenden Anmeldung. Wie in Fig. 1 gezeigt, umfasst die Modellarchitektur ein Identifikationsmodul für die Straßenoberfläche und die Umgebung 101, ein Berechnungsmodul für das Aktuatorspotenzial 102, ein Berechnungsmodul für die Fahrzeugleistungsbeschränkungen 103, ein Fahrer-Identifikationsmodul 104, ein Passagier-Identifikationsmodul 105, ein Eingabe- und verarbeitungsmodul über eine Mensch-Maschine-Schnittstelle (Human Machine Interface, HMI) 106, ein Komfort-Integrationsverarbeitungsmodul 107, ein Integrationsverarbeitungsmodul für die Trajektorienbeschränkungen 108 und ein Signalausgabe- und verarbeitungsmodul 109.

Dabei empfängt das Identifikationsmodul für die Straßenoberfläche und die Umgebung 101 vom Fahrzeug aufgenommene Straßenoberflächen- und Hindernisinformationen und gibt diese Informationen anschließend in das Berechnungsmodul für das Aktuatorspotenzial 102 ein. Das Berechnungsmodul für das Aktuatorspotenzial 102 berechnet dann das Potenzial jedes Aktuators anhand der Straßenoberflächeninformationen und sendet danach das Potenzial jedes Aktuators an das Berechnungsmodul für die Fahrzeugleistungsbeschränkungen 103 aus. Durch die Berechnung werden schließlich die dynamischen Trajektorienbeschränkungsinformationen des Fahrzeugs erhalten.

Das Fahrer-Identifikationsmodul 104 nimmt Fahrer-Identifikationsinformationen innerhalb des Fahrzeugs auf, das Passagier-Identifikationsmodul 105 nimmt Passagier-Identifikationsinformationen innerhalb des Fahrzeugs auf und das Eingabe- und Verarbeitungsmodul über HMI 106 empfängt vom Fahrer eingegebene HMI-Informationen. Anschließend werden die Fahrer- und Passagier-Identifikationsinformationen sowie die HMI-Informationen zur Verarbeitung in das Komfort-Integrationsverarbeitungsmodul 107 eingegeben, um die Komfort-Trajektorienbeschränkungsinformationen des Fahrzeugs zu erhalten.

Das Integrationsverarbeitunglungsmodul für die Trajektorienbeschränkungen 108 führt eine Fusion und Verarbeitung anhand den Komfort-Trajektorienbeschränkungsinformationen, den dynamischen Trajektorienbeschränkungsinformationen und den Straßenoberflächeninformationen durch, so dass die Informationen über die Zieltrajektorienbeschränkungen des Fahrzeugs erhalten werden. Diese Informationen über die Zieltrajektorienbeschränkungen werden anschließend in das Signalausgabe- und verarbeitungsmodul 109 eingegeben, um die Zieltrajektorie anzupassen und zu bestimmen.

Im Folgenden wird anhand konkreter Ausführungsbeispiele detailliert beschrieben, wie die technische Lösung der vorliegenden Anmeldung aussieht und wie die technische Lösung der vorliegenden Anmeldung die oben genannten technischen Probleme löst. Die folgenden konkreten Ausführungsbeispiele können miteinander kombiniert werden, und in einigen Ausführungsbeispielen werden gleiche oder ähnliche Konzepte oder Prozesse möglicherweise nicht wiederholt. Die Ausführungsbeispiele der vorliegenden Anmeldung werden nachstehend in Verbindung mit den beigefügten Zeichnungen beschrieben.

Fig. 2 zeigt ein erstes schematisches Flussdiagramm des Verfahrens zur Bestimmung von Zieltrajektorienbeschränkungen eines Fahrzeugs der vorliegenden Anmeldung. Wie in Fig. 2 gezeigt, umfasst das Verfahren:

S201: Berechnen von Potenzialen mehrerer Aktuatoren des Fahrzeugs basierend auf einem vorbestimmten Straßenoberflächenhaftungskoeffizienten.

Zur Verbesserung der Durchführbarkeit der Trajektorienplanung, der Stabilität und Sicherheit im Fahrbetrieb des Fahrzeugs, der Fahrzeugmanövrierfähigkeit, der Gesamtleistung des autonomen Fahrsystems und zur Anpassung an mehr Straßenverhältnisse und Umgebungen kann in diesem Schritt die Fahrwerksdynamik des Fahrzeugs bei den Beschränkungen für die Fahrzeugtrajektorie berücksichtigt werden.

Insbesondere werden die Potenziale mehrerer Aktuatoren des Fahrzeugs berechnet, nachdem der Straßenoberflächenhaftungskoeffizient bestimmt wurde.

Beispielhaft können die mehreren Aktuatoren des Fahrzeugs einen Antriebsaktuator, einen Bremsaktuator, einen Lenkaktuator und einen Aufhängungsaktuator umfassen, so dass die Potenziale der obigen jeweiligen Aktuatoren basierend auf dem Straßenoberflächenhaftungskoeffizienten berechnet werden.

S202: Umwandeln des Potenzials jedes Aktuators in das dynamische Potenzial des gesamten Fahrzeugs, um dynamische Trajektorienbeschränkungsinformationen für das Fahrzeug zu erhalten.

Sobald das Potenzial jedes Fahrwerksaktuators erhalten wurde, wird in diesem Schritt die Potenziale aller Aktuatoren in das gesamte dynamische Potenzial des Fahrzeugs umgewandelt, wodurch diese Informationen dann in dynamische Beschränkungen für die Trajektorie des Fahrzeugs umgewandelt werden können.

Beispielhaft können der maximale Lenkwinkel und die maximale Lenkgeschwindigkeit des Fahrzeugs anhand des Potenzials des Aktuators des Lenksystems begrenzt werden, um die Stabilität des Fahrzeugs bei der Kurvenfahrt gewährleisten und einen Kontrollverlust verhindern zu können. Anhand des Potenzials des Aktuators des Bremssystems können zudem die maximale Verzögerung und der Bremsweg des Fahrzeugs begrenzt werden, um sicherzustellen, dass das Fahrzeug bei einer Notbremsung schnell anhalten und gleichzeitig stabil bleiben kann. Die Steifigkeit und Dämpfung der Suspendierung können anhand des Potenzials des Aktuators des Suspendierungssystems an unterschiedliche Straßenverhältnisse und Fahranforderungen angepasst werden, wodurch der Fahrtkomfort und die Manövrierstabilität des Fahrzeugs erhalten bleiben. Anhand des Potenzials des Antriebssystems (beispielsweise des Verbrennungsmotors oder Elektromotors) des Fahrzeugs können die maximale Geschwindigkeit und Beschleunigung des Fahrzeugs begrenzt werden, um sicherzustellen, dass die Leistungsfähigkeit des Antriebssystems während des Fahrbetriebs nicht überschritten wird.

S203: Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen.

Im Stand der Technik werden die Beschränkungen der Zieltrajektorie nur unter Berücksichtigung der Fahrzeugdynamik und der Hindernisfaktoren durchgeführt, d. h., der Schwerpunkt liegt nur auf der X- und Y-Richtung, ohne den Komfort in der Z-Richtung zu berücksichtigen, und dies führt zu einem schlechten Fahrerlebnis für den Fahrer und zu relativ monotonen Beschränkungen. Somit erfolgt dieser Schritt wie folgt. Die Komfort-Trajektorienbeschränkungsinformationen des Fahrzeugs werden basierend auf den Straßenoberflächen- und Hindernisinformationen sowie den Fahrzeuginsassen-Identifikationsinformationen bestimmt.

Insbesondere wird der Komfortsteuermodus gemäß den Fahrzeuginsassen-Identifikationsinformation bestimmt, und die Komfort-Trajektorienbeschränkungsinformationen werden durch eine Fuzzy-Regelungsberechnung basierend auf den Straßenoberflächeninformationen, den Hindernisinformationen und dem Komfortsteuermodus erhalten.

S204: Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten.

Nachdem die dynamischen Trajektorienbeschränkungsinformationen und die Komfort-Trajektorienbeschränkungsinformationen bestimmt wurden, werden in diesem Schritt die beiden Typen von Beschränkungsinformationen miteinander fusioniert, , um die Informationen über die Zieltrajektorienbeschränkungen des Fahrzeugs zu erhalten.

Beispielhaft beziehen sich die dynamischen Trajektorienbeschränkungsinformationen vor allem auf die physikalische Leistung und Stabilität des Fahrzeugs während der Fahrt. Diese Beschränkungsinformationen basieren in der Regel auf einem Dynamikmodell des Fahrzeugs und umfassen die Längsbeschleunigung, die Veränderungsrate der Längsbeschleunigung, die Querbeschleunigung, die Veränderungsrate der Querbeschleunigung, die Krümmung einer Zieltrajektorie, die Veränderungsrate der Krümmung einer Zieltrajektorie und die Fahrgeschwindigkeit des Fahrzeugs usw. All diese Parameter bestimmen gemeinsam die dynamische Reaktion und die Stabilität des Fahrzeugs während der Fahrt. Die Komfort-Trajektorienbeschränkungsinformationen beziehen sich dagegen vor allem auf das Fahrterlebnis und den Komfort der Passagiere. Diese Beschränkungsinformationen basieren in der Regel auf dem Suspendierungssystem, der Sitzgestaltung des Fahrzeugs sowie anderen Faktoren wie Schwingungen und Beschleunigungsänderungen während der Fahrt des Fahrzeugs. Sie umfassen die Vertikalbeschleunigung der Karosserie, die Veränderungsrate der Vertikalbeschleunigung der Karosserie, die Giergeschwindigkeit, die Veränderungsrate der Giergeschwindigkeit, die Nickgeschwindigkeit, die Veränderungsrate der Nickgeschwindigkeit, die Wankgeschwindigkeit und die Veränderungsrate der Wankgeschwindigkeit usw. All diese Parameter bestimmen gemeinsam den Komfort und das Fahrterlebnis der Passagiere während der Fahrt. Die Fusion dieser beiden Typen von Beschränkungsinformationen kann wie folgt erfolgen:

1. Den dynamischen Trajektorienbeschränkungsinformationen und den Komfort-Trajektorienbeschränkungsinformationen werden jeweils unterschiedliche Gewichtungen zugewiesen, dann wird die gewichtete Summe als endgültige Beschränkungsinformationen berechnet. Je nach Fahrzeugtyp, Passagieranforderungen, Fahrumgebungen und anderen Faktoren kann die Auswahl der Gewichtungen angepasst werden. Bei Hochleistungssportwagen kann beispielsweise der dynamischen Beschränkung eine höhere Gewichtung zugewiesen werden. Bei Luxuslimousinen kann der Schwerpunkt hingegen eher auf die Komfort-Beschränkung liegen.

Optional können die oben genannten Gewichtungen dynamisch an die Änderungen der Fahrumgebungen angepasst werden. Bei Fahrten auf Autobahnen kann beispielsweise die Gewichtung der dynamischen Beschränkung erhöht werden, um die Stabilität und Sicherheit des Fahrzeugs sicherzustellen. Bei Fahrten auf städtischen Straßen kann hingegen die Gewichtung der Komfort-Beschränkung erhöht werden, um das Fahrterlebnis der Passagiere zu verbessern.

2. Es werden Optimierungsalgorithmen (wie genetische Algorithmen, Partikelschwarmalgorithmen usw.) eingesetzt, um optimale Trajektorien zu finden, die sowohl die dynamische Beschränkung als auch die Komfort-Beschränkung erfüllen. Bei dieser Methode können mehrere Beschränkungsbedingungen umfassend berücksichtigt und die optimale Lösung ermittelt werden.

Beispielhaft ist für den Optimierungsalgorithmus die Ermittlung einer Zielfunktion von zentraler Bedeutung, die die zu optimierenden Leistungsindikatoren definiert. Bei der Fusion der dynamischen Beschränkung und der Komfort-Beschränkung kann eine umfassende Zielfunktion definiert sein, die die Indikatoren für die dynamische Leistung und den Komfort gleichzeitig berücksichtigt. Beispielsweise kann die Zielfunktion so definiert sein, dass die Differenz zwischen der gewichteten Summe der Indikatoren für die dynamische Leistung und der gewichteten Summe der Indikatoren für den Komfort minimiert wird.

Die Beschränkungsbedingungen stellen sicher, dass der Optimierungsalgorithmus während des Suchvorgangs nicht gegen die dynamische Beschränkung und die Komfort-Beschränkung verstößt. Zu diesen Beschränkungsbedingungen können die physikalischen Grenzen des Fahrzeugs, die Komfortanforderungen der Passagiere und Einschränkungen durch die Straßen- und Verkehrsumgebung usw. gehören.

3. Es wird eine Fuzzylogik verwendet, um die unklare Beziehung zwischen der dynamischen Beschränkung und der Komfort-Beschränkung zu behandeln. Durch die Definition von Fuzzy-Mengen und Fuzzy-Regeln ist es möglich, die Fusion und Koordination der beiden Arten von Beschränkungsinformationen zu erreichen.

Optional bilden die Fuzzy-Mengen die Grundlage der Fuzzylogik. Bei der Fusion der dynamischen Beschränkung und der Komfort-Beschränkung können zwei Fuzzy-Mengen definiert sein, von denen eine Fuzzy-Menge die dynamische Beschränkung und die andere Fuzzy-Menge die Komfort-Beschränkung repräsentiert. Die Elemente in diesen Mengen können verschiedene Beschränkungsinformationen oder Leistungsindikatoren darstellen.

Mit den Fuzzy-Regeln sind die Beziehungen zwischen den Fuzzy-Mengen definiert. Bei der Fusion der dynamischen Beschränkung und der Komfort-Beschränkung kann eine Reihe von Fuzzy-Regeln definiert sein, um die Wechselwirkung und den Einfluss dieser Beschränkungen aufeinander zu beschreiben. Beispielsweise kann eine Regel wie folgt definiert sein. Wenn die dynamische Beschränkung relativ hoch und die Komfort-Beschränkung relativ niedrig ist, wird die Gewichtung der Komfort-Beschränkung erhöht. Wenn die dynamische Beschränkung relativ niedrig und die Komfort-Beschränkung relativ hoch ist, wird die Gewichtung der dynamischen Beschränkung erhöht.

Bei der Defuzzifizierung handelt es sich um den Prozess der Umwandlung unscharfer Ausgabe in eindeutige Ausgabe. Nach der Fusion der dynamischen Beschränkung und der Komfort-Beschränkung ist es erforderlich, unscharfe Ausgabeergebnisse in eindeutige Informationen über die Zieltrajektorienbeschränkungen des Fahrzeugs umzuwandeln. Dies kann mithilfe von Defuzzifizierungsmethoden wie dem Schwerpunkt, dem maximalen Zugehörigkeitsgrad oder dem gewichteten Durchschnitt erfolgen.

Die obigen Ausführungen dienen lediglich als konkretes Beispiel für die Fusion und Verarbeitung der Informationen über die dynamische Beschränkung und die Komfort-Beschränkung. Die konkreten Implementierungen sind in den Ausführungsbeispielen der vorliegenden Anmeldung nicht eingeschränkt.

Optional umfassen die Informationen über die Zieltrajektorienbeschränkungen Maximal- und Minimalwerte jeder der folgenden Größen, aber nicht darauf beschränkt: die Längsbeschleunigung, die Veränderungsrate der Längsbeschleunigung, die Querbeschleunigung, die Veränderungsrate der Querbeschleunigung, die Krümmung einer Zieltrajektorie, die Veränderungsrate der Krümmung einer Zieltrajektorie, die Fahrgeschwindigkeit, die Vertikalbeschleunigung der Karosserie, die Veränderungsrate der Vertikalbeschleunigung der Karosserie, die Giergeschwindigkeit, die Veränderungsrate der Giergeschwindigkeit, die Nickgeschwindigkeit, die Veränderungsrate der Nickgeschwindigkeit, die Wankgeschwindigkeit und die Veränderungsrate der Wankgeschwindigkeit.

Das Verfahren zur Bestimmung von Zieltrajektorienbeschränkungen eines Fahrzeugs gemäß einem Ausführungsbeispiel der vorliegenden Anmeldung umfasst: Berechnen von Potenzialen mehrerer Aktuatoren des Fahrzeugs basierend auf einem vorbestimmten Straßenoberflächenhaftungskoeffizienten; Umwandeln des Potenzials jedes Aktuators in das dynamische Potenzial des gesamten Fahrzeugs, um dynamische Trajektorienbeschränkungsinformationen für das Fahrzeug zu erhalten; Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen; und Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten. Unter umfassender Berücksichtigung von Faktoren wie der Dynamik des Fahrwerks des Fahrzeugs, der Komfortanforderung und der Komplexität der Fahrumgebung wird durch das oben beschriebene Verfahren eine genaue Beschränkung und Anpassung der Fahrtrajektorie des Fahrzeugs ermöglicht. Dadurch werden nicht nur die Sicherheit und die Stabilität beim Fahren erhöht, sondern auch der Fahrkomfort und das Fahrerlebnis der Passagiere werden optimiert. Gleichzeitig werden das Intelligenzniveau des autonomen Fahrsystems, die Betriebseffizienz und die Energieeffizienz des Fahrzeugs verbessert.

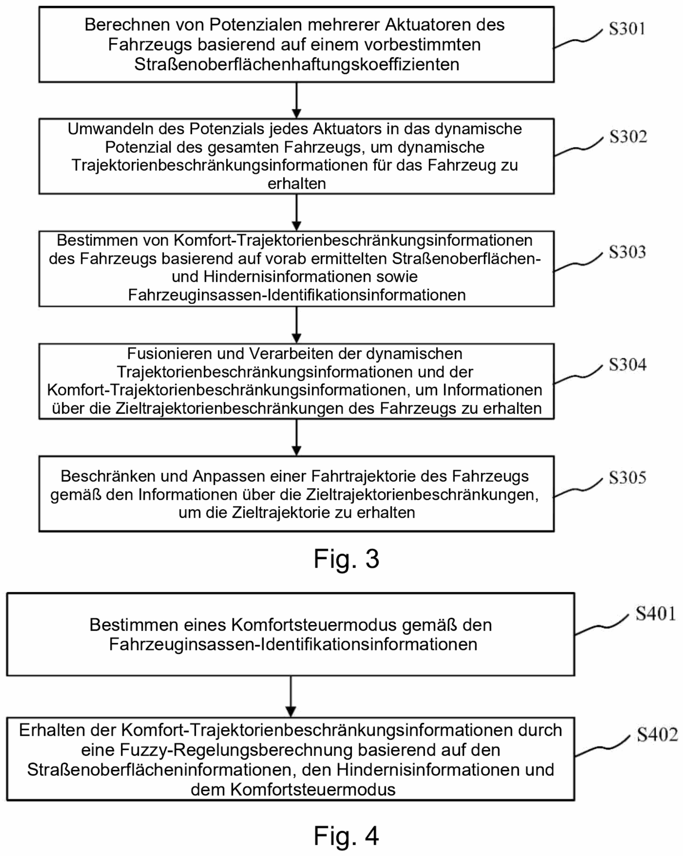

Fig. 3 zeigt ein schematisches Flussdiagramm des Verfahrens zur Bestimmung einer Zieltrajektorie eines Fahrzeugs der vorliegenden Anmeldung. Wie in Fig. 3 gezeigt, umfasst dieses Verfahren:

S301: Berechnen von Potenzialen mehrerer Aktuatoren des Fahrzeugs basierend auf einem vorbestimmten Straßenoberflächenhaftungskoeffizienten.

S302: Umwandeln des Potenzials jedes Aktuators in das dynamische Potenzial des gesamten Fahrzeugs, um dynamische Trajektorienbeschränkungsinformationen für das Fahrzeug zu erhalten.

S303: Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen.

S304: Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten.

Die Schritte S301 bis S304 sind in ihrer konkreten Implementierung identisch mit den Schritten S201 bis S204 in den oben beschriebenen Ausführungsbeispielen und werden hier nicht mehr wiederholt.

S305: Beschränken und Anpassen einer Fahrtrajektorie des Fahrzeugs gemäß den Informationen über die Zieltrajektorienbeschränkungen, um die Zieltrajektorie zu erhalten.

In diesem Schritt muss eine anfängliche Planung der Fahrtrajektorie des Fahrzeugs nach der Bestimmung der Informationen über die Zieltrajektorienbeschränkungen auf der Grundlage dieser Beschränkungsinformationen durchgeführt werden, um sicherzustellen, dass das Fahrzeug sicher, stabil und komfortabel in Übereinstimmung mit der ordnungsgemäßen Trajektorie fährt. Dies betrifft in der Regel die Modellierung des Kinematik- und Dynamikmodells des Fahrzeugs sowie die Vorhersage und Optimierung der Fahrtrajektorie des Fahrzeugs basierend auf diesen Modellen. Die anfänglich geplante Fahrtrajektorie sollte möglichst nah an der Zieltrajektorie liegen und gleichzeitig alle Beschränkungsbedingungen erfüllen. Ausgehend von der anfänglich geplanten Fahrtrajektorie muss die Trajektorie basierend auf den Informationen über die Zieltrajektorienbeschränkungen weiter beschränkt und angepasst werden.

Auf der Grundlage der Informationen über die dynamische Beschränkung, wie die Längsbeschleunigung und die Veränderungsrate der Längsbeschleunigung des Fahrzeugs, werden die Beschleunigung, die Untersetzung und andere Bewegungszustände des Fahrzeugs angepasst, um die Fahrstabilität und -sicherheit des Fahrzeugs sicherzustellen.

Auf der Grundlage der Informationen über die Komfort-Beschränkung, wie die Vertikalbeschleunigung der Karosserie und die Veränderungsrate der Vertikalbeschleunigung der Karosserie, werden das Suspendierungssystem, die Sitzgestaltung usw. des Fahrzeugs angepasst, um den Fahrtkomfort der Passagiere zu verbessern.

Auf der Grundlage externer Faktoren wie Straßenbedingungen und Verkehrsfluss wird die Fahrtrajektorie des Fahrzeugs dynamisch angepasst, um Kollisionen mit Hindernissen oder Verstöße gegen Verkehrsregeln zu vermeiden.

Das Verfahren zur Bestimmung einer Zieltrajektorie eines Fahrzeugs gemäß einem Ausführungsbeispiel der vorliegenden Anmeldung umfasst: Berechnen von Potenzialen mehrerer Aktuatoren des Fahrzeugs basierend auf einem vorbestimmten Straßenoberflächenhaftungskoeffizienten; Umwandeln des Potenzials jedes Aktuators in das dynamische Potenzial des gesamten Fahrzeugs, um dynamische Trajektorienbeschränkungsinformationen für das Fahrzeug zu erhalten; Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen; Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten; und Beschränken und Anpassen einer Fahrtrajektorie des Fahrzeugs gemäß den Informationen über die Zieltrajektorienbeschränkungen, um die Zieltrajektorie zu erhalten. Durch die umfassende Berücksichtigung der Beschränkungsbedingungen werden präzisere Beschränkungsinformationen erhalten, so dass die Zieltrajektorie genauer ist und die Fahrstabilität und -sicherheit erhöht werden.

Fig. 4 zeigt ein zweites schematisches Flussdiagramm des Verfahrens zur Bestimmung von Zieltrajektorienbeschränkungen eines Fahrzeugs der vorliegenden Anmeldung. Wie in Fig. 4 gezeigt, ist auf der Grundlage des obigen Ausführungsbeispiels vorgesehen, dass der Schritt S203 im Einzelnen umfasst:
S401: Bestimmen eines Komfortsteuermodus gemäß den Fahrzeuginsassen-Identifikationsinformationen.

In diesem Schritt kann zur Verbesserung der Fahrintelligenz nach Ermittelung der Fahrzeuginsasseninformationen der Komfortsteuermodus basierend auf den Fahrzeuginsassen-Identifikationsinformationen bestimmt werden.

Konkret geht es um Folgendes: Bestimmen eines vom Fahrer festgelegten Steuermodus als Komfortsteuermodus, wenn vorab ermittelte HMI-Informationen anzeigen, dass der Fahrer den Steuermodus festgelegt hat; Bestimmen eines Kindermodus als Komfortsteuermodus, wenn die Fahrzeuginsassen-Identifikationsinformationen anzeigen, dass die Fahrzeuginsassen ein Kind umfassen; Bestimmen eines Seniorenmodus als Komfortsteuermodus, wenn die Fahrzeuginsassen-Identifikationsinformationen anzeigen, dass die Fahrzeuginsassen kein Kind und aber einen Senioren umfassen; Bestimmen eines Passagiermodus als Komfortsteuermodus, wenn die Fahrzeuginsassen-Identifikationsinformationen anzeigen, dass die Fahrzeuginsassen einen Passagier und aber kein Kind und keinen Senioren umfassen; und Bestimmen eines Fahrermodus als Komfortsteuermodus basierend auf Informationen über die Merkmale des Fahrers, wenn die Fahrzeuginsassen-Identifikationsinformationen anzeigen, dass die Fahrzeuginsassen nur den Fahrer umfassen.

S402: Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus.

Nachdem die Straßenoberflächeninformationen, die Hindernisinformationen und der Komfortsteuermodus vorab ermittelt wurden, werden in diesem Schritt die Komfort-Trajektorienbeschränkungsinformationen basierend auf den oben genannten mehreren Informationen bestimmt.

Konkret geht es um Folgendes: Bestimmen von Komfort-Straßenoberflächenbeschränkungsinformationen basierend auf den Straßenoberflächeninformationen; Bestimmen von Komfort-Hindernisbeschränkungsinformationen basierend auf den Hindernisinformationen; Bestimmen eines Korrekturfaktors gemäß dem Komfortsteuermodus; sowie Fusionieren und Korrigieren der Komfort-Straßenoberflächenbeschränkungsinformationen und der Komfort-Hindernisbeschränkungsinformationen durch einen Fuzzy-Regelungsalgorithmus basierend auf dem Korrekturfaktor, um die Komfort-Trajektorienbeschränkungsinformationen zu erhalten.

Das Verfahren zur Bestimmung von Zieltrajektorienbeschränkungen eines Fahrzeugs gemäß einem Ausführungsbeispiel der vorliegenden Anmeldung umfasst: Bestimmen eines Komfortsteuermodus gemäß den Fahrzeuginsassen-Identifikationsinformationen; und Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus. Unter umfassender Berücksichtigung von den Fahrzeuginsassen-Identifikationsinformationen, Straßenoberflächeninformationen, Hindernisinformationen und dem Komfortsteuermodus werden in dem oben beschriebenen Verfahren mit dem Fuzzy-Regelungsalgorithmus die Komfort-Trajektorienbeschränkungsinformationen errechnet, so dass der Fahrtkomfort erhöht, die Fahrsicherheit verbessert, die Betriebseffizienz des Fahrzeugs optimiert und das Intelligenzniveau des autonomen Fahrsystems erhöht wird.

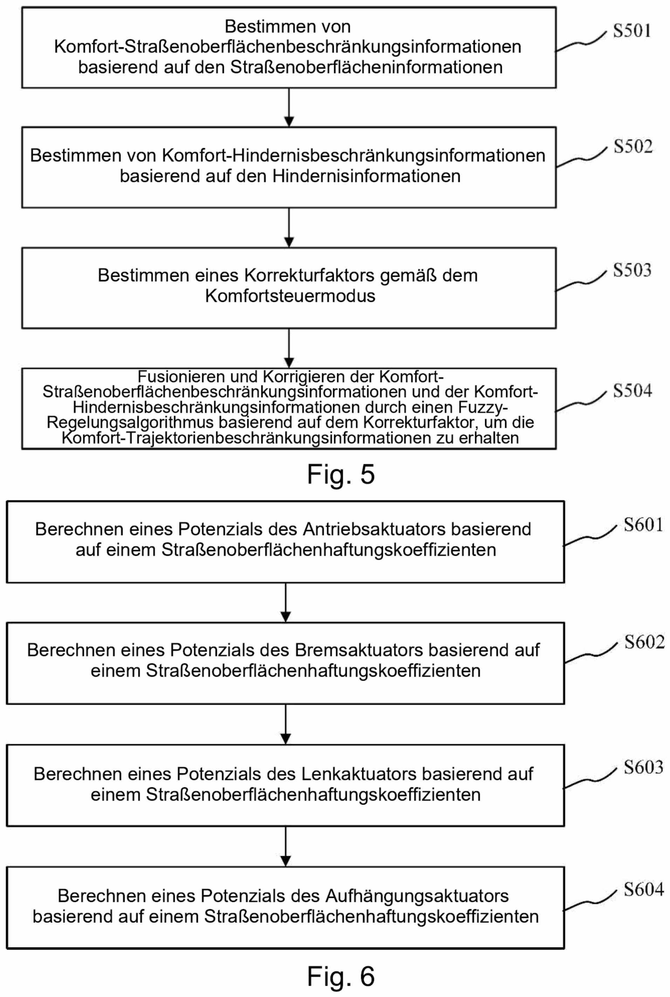

Fig. 5 zeigt ein drittes schematisches Flussdiagramm des Verfahrens zur Bestimmung von Zieltrajektorienbeschränkungen eines Fahrzeugs der vorliegenden Anmeldung. Wie in Fig. 5 gezeigt, ist auf der Grundlage des obigen Ausführungsbeispiels vorgesehen, dass der Schritt S402 im Einzelnen umfasst:
S501: Bestimmen von Komfort-Straßenoberflächenbeschränkungsinformationen basierend auf den Straßenoberflächeninformationen.

Nachdem die Straßenoberflächeninformationen vorab ermittelt wurden, wird in diesem Schritt basierend auf den Straßenoberflächentypen in den Straßenoberflächeninformationen eine Zuordnung mit einer Menge vordefinierter Grenzwerte durchgeführt, um die Komfort-Straßenoberflächenbeschränkungsinformationen zu erhalten.

In der Menge vordefinierter Grenzwerte sind dabei Grenzwerte für mehrere Beschränkungsbedingungen enthalten, die verschiedenen Straßenoberflächentypen entsprechen. Die Beschränkungsbedingungen können umfassen, aber nicht darauf beschränkt: die Längsbeschleunigung, die Veränderungsrate der Längsbeschleunigung, die Querbeschleunigung, die Veränderungsrate der Querbeschleunigung, die Krümmung einer Zieltrajektorie, die Veränderungsrate der Krümmung einer Zieltrajektorie, die Fahrgeschwindigkeit, die Vertikalbeschleunigung der Karosserie, die Veränderungsrate der Vertikalbeschleunigung der Karosserie, die Giergeschwindigkeit, die Veränderungsrate der Giergeschwindigkeit, die Nickgeschwindigkeit, die Veränderungsrate der Nickgeschwindigkeit, die Wankgeschwindigkeit und die Veränderungsrate der Wankgeschwindigkeit.

Beispielhaft können zu den Straßenoberflächentypen gehören: Autobahn-Straßenoberflächen, die in der Regel ein hohes Maß an Ebenheit und struktureller Festigkeit aufweisen und für Hochgeschwindigkeitsfahrten ausgelegt sind; Straßenoberflächen städtischer Straßen, die Haupt- und Nebenstraßen sowie Abzweigungen umfassen und Faktoren wie Verkehrsfluss, Fußgängersicherheit und Stadtästhetik bei der Auslegung berücksichtigen müssen; und Landstraßen-Straßenoberflächen, die in der Regel relativ grob sind, eventuell zahlreiche Schlaglöcher und Unebenheiten aufweisen und für Niedriggeschwindigkeitsfahrten ausgelegt sind.

Längsbeschleunigung

1. Autobahn-Straßenoberfläche

Maximalwert: Dieser beträgt normalerweise nicht mehr als 0,3 m/s$^2$ (dieser Wert kann je nach spezifischen Auslegungskriterien variieren, überschreitet jedoch im Allgemeinen nicht diesen Bereich, um die Stabilität bei Hochgeschwindigkeitsfahrten sicherzustellen).
Minimalwert: Es gibt keine spezifische Grenze für den Minimalwert, aber eine übermäßige negative Beschleunigung (d. h. eine zu schnelle Untersetzung) sollte vermieden werden, um Unannehmlichkeiten für die Passagiere zu vermeiden.

2. Straßenoberfläche städtischer Straßen

Maximalwert: Dieser kann etwas höher sein als bei Autobahnen, überschreitet jedoch im Allgemeinen 0,3 m/s$^2$ (der konkrete Wert hängt von Faktoren wie dem Verkehrsfluss und der Auslegungsgeschwindigkeit der städtischen Straßen ab) nicht.
Minimalwert: Ebenso gibt es keine spezifische Grenze für den Minimalwert, aber es ist unerlässlich, die Stabilität und den Komfort für die Passagiere bei Niedriggeschwindigkeitsfahrten des Fahrzeugs in Städten sicherzustellen.

3. Landstraßen-Straßenoberfläche

Maximalwert: Aufgrund einer relativ geringen Fahrgeschwindigkeit kann der Maximalwert für die Längsbeschleunigung etwas großzügiger bemessen sein, sollte jedoch im Allgemeinen 0,4 m/s$^2$ nicht überschreiten (um einen Kontrollverlust des Fahrzeugs oder Unannehmlichkeiten für die Passagiere zu vermeiden).
Minimalwert: Es gibt keine spezifische Grenze für den Minimalwert, aber es ist unerlässlich, die Stabilität und Sicherheit während der Fahrt des Fahrzeugs auf Landstraßen sicherzustellen.

Längsverzögerung

1. Autobahn-Straßenoberfläche

Maximalwert: Bei einer Notbremsung kann die Längsverzögerung etwa einen großen Wert erreichen, überschreitet jedoch im Allgemeinen 0,8 g (g steht für die Erdbeschleunigung, die etwa 9,8 m/s$^2$ beträgt) nicht. Dies hängt von der Bremsleistung des Fahrzeugs und dem Reibungskoeffizienten der Straßenoberfläche ab.
Minimalwert: Es gibt keine spezifische Grenze für den Minimalwert, aber es muss sichergestellt werden, dass das Fahrzeug sanft bis zum Stillstand abbremsen kann.

2. Straßenoberfläche städtischer Straßen

Maximalwert: Dieser kann etwas niedriger sein als bei Autobahnen, um den Bedürfnissen häufiger Halte- und Anfahrmanöver in Städten gerecht zu werden. Im Allgemeinen überschreitet er 0,8 g nicht, aber der konkrete Wert hängt vom Verkehrsfluss und den Auslegungskriterien der städtischen Straßen ab.

Minimalwert: Ebenso gibt es keine spezifische Grenze für den Minimalwert, aber es ist unerlässlich, die Stabilität und den Komfort für die Passagiere bei Niedriggeschwindigkeitsfahrten des Fahrzeugs in Städten sicherzustellen.

3. Landstraßen-Straßenoberfläche

Maximalwert: Dieser kann etwas großzügiger bemessen sein, sollte jedoch im Allgemeinen 1,0 g nicht überschreiten (um einen Kontrollverlust dses Fahrzeug oder erhebliche Unannehmlichkeiten für die Passagiere zu vermeiden).

Minimalwert: Es gibt keine spezifische Grenze für den Minimalwert, aber es muss sichergestellt werden, dass das Fahrzeug auf Landstraßen sicher bis zum Stillstand abbremsen kann.

Krümmung

1. Autobahn-Straßenoberfläche

Maximalwert: Der Mindestkrümmungsradius für Autobahnen in Ebenen und hügeligen Gebieten ist in der Regel relativ hoch, beispielsweise 650 m (entsprechend einem geringen Krümmungswert). Autobahnen in gebirgigen Gebieten können einen kleinen Krümmungsradius, beispielsweise 250 m (entsprechend einem großen Krümmungswert), annehmen, erfordern jedoch eine spezielle Auslegung und Verstärkung.

Minimalwert: Es gibt keine spezifische Grenze für den Minimalwert, aber eine zu geringe Krümmung kann zu Instabilität und Unannehmlichkeiten für die Passagiere während der Fahrt des Fahrzeugs führen.

2. Straßenoberfläche städtischer Straßen

Maximalwert: Dieser hängt vom Straßentyp und den Verkehrsanforderungen ab. Der Krümmungsradius von Kurven auf normalen städtischen Straßen kann geringer sein als auf Autobahnen, aber der konkrete Wert muss gemäß den Auslegungskriterien bestimmt werden.

Minimalwert: Ebenso gibt es keine spezifische Grenze für den Minimalwert, aber es ist unerlässlich, die Stabilität und Sicherheit während der Fahrt des Fahrzeugs auf städtischen Straßen sicherzustellen.

3. Landstraßen-Straßenoberfläche

Maximalwert: Dieser kann etwas großzügiger bemessen sein, sollte jedoch im Allgemeinen nicht zu klein sein,um Instabilität und Unannehmlichkeiten für die Passagiere während der Fahrt des Fahrzeugs zu vermeiden. Der konkrete Wert hängt von den Auslegungskriterien sowie den Verkehrsanforderungen der Landstraßen ab.

Minimalwert: Es gibt keine spezifische Grenze für den Minimalwert, aber es muss sichergestellt werden, dass das Fahrzeug auf Landstraßen sicher durch Kurven fahren kann.

Die oben genannten Grenzwerte sind lediglich beispielhaft und stellen keine absoluten Standardwerte dar. Bei der praktischen Auslegung und Wartung von Straßen müssen mehrere Faktoren (wie die Merkmale des jeweiligen Gebiets, der Verkehrsfluss, die Auslegungsgeschwindigkeit usw.) umfassend berücksichtigt werden, um die endgültigen Komfort-Grenzwerte zu bestimmen.

S502: Bestimmen von Komfort-Hindernisbeschränkungsinformationen basierend auf den Hindernisinformationen.

Nachdem die Hindernisinformationen der Straße, die das Fahrzeug befährt, vorab ermittelt wurden, werden in diesem Schritt die Komfort-Hindernisbeschränkungsinformationen basierend auf den Hindernisinformationen bestimmt.

Insbesondere werden die Komfort-Hindernisbeschränkungsinformationen auf der Grundlage der Art, Entfernung und Höhe eines Hindernisses ermittelt.

Beispielhaft wirken sich verschiedene Arten von Hindernissen unterschiedlich auf den Komfort aus. So wirken sich beispielsweise stationäre Gebäude und Bäume optisch und physisch anders aus als bewegende Fahrzeuge und Fußgänger. Die oben genannte Entfernung bezieht sich auf den Abstand zwischen einem Hindernis und einem Beobachter (z. B. einem Fußgänger oder dem Fahrer). Je größer diese Entfernung ist, desto geringer wirkt sich das Hindernis auf den Komfort aus. Die Höhe bezieht sich auf die Höhe eines Hindernisses relativ zur Sichtlinie des Beobachters bzw. zum Boden. Je größer diese Höhe ist, desto auffälliger kann das Hindernis sein und desto stärker kann es sich auf den Komfort auswirken.

Bei Komfort-Kriterien kann es sich um Komfort-Schwellenwerte handeln, die basierend auf den sensorischen Wahrnehmungen und psychologischen Reaktionen der Passagiere bestimmt werden, wie beispielsweise maximale Querbeschleunigung, maximale Längsverzögerung und Mindestkrümmungsradius.

Beispielsweise ist vorgesehen, dass der Fahrzeugtyp ein Familienwagen ist, der mit einer Fahrgeschwindigkeit von 60 km/h (ca. 16,67 m/s) fährt, dass der Straßentyp eine städtische Hauptstraße ist, und dass der Hindernistyp ein stationäres Hindernis am Straßenrand (z. B. Bäume oder Straßenlaternen) ist. Das Komfort-Kriterium ist hierbei als maximale Querbeschleunigung von 0,3 g (ca. 3 m/s²) definiert. Die Grenzen für die Sichtbehinderung sind so begrenzt, dass kein Hindernis die Sichtlinie des Fahrers um mehr als 10° blockieren darf.

Die Grenzwerte für die Querbeschleunigung werden wie folgt berechnet: Es ist angenommen, dass das Fahrzeug eine Kurve mit einem Kurvenradius von R Metern durchfahren muss. Gemäß der Formel für Kreisbewegungen beträgt die Querbeschleunigung a = v² / R. Um das Komfort-Kriterium zu erfüllen, ist a ≤ 0,3 g, wobei v = 16,67 m/s eingesetzt wird, so dass R ≥ (16,67 m/s)² / (3 m/s²) ≈ 92,9 m ergibt. Daher darf der Kurvenradius nicht weniger als 92,9 Meter betragen, um die Komfortgrenzen für die Querbeschleunigung zu erfüllen.

Die Grenzwerte für die Sichtbehinderung werden wie folgt berechnet: Es ist angenommen, dass sich ein Hindernis in einem Winkel von θ zur Fahrtrichtung des Fahrzeugs befindet, wobei die Höhe des Hindernisses h Meter und die Entfernung des Hindernisses vom Fahrzeug d Meter beträgt. Gemäß den trigonometrischen Funktionen gilt: tan(θ) = h / d. Um die Grenzen für die Sichtbehinderung zu erfüllen, ist θ ≤ 10. Es ist angenommen, dass die Höhe des Hindernisses (z. B. einer Straßenlaterne) h = 5 Meter beträgt, dann ist d ≥ 5 Meter / tan(10°) ≈ 28,66 Meter. Daher darf die Entfernung zwischen dem Hindernis und dem Fahrzeug nicht weniger als 28,66 Meter betragen, um zu vermeiden, dass die Sichtlinie des Fahrers um mehr als 10° blockiert wird.

S503: Bestimmen eines Korrekturfaktors gemäß dem Komfortsteuermodus.

Nachdem der Komfortsteuermodus für die Fahrt des Fahrzeugs bestimmt wurde, kann in diesem Schritt die Komfort-Beschränkung basierend auf dem aktuellen Komfortsteuermodus des Fahrzeugs korrigiert und angepasst werden, d. h., es wird ein Korrekturfaktor gemäß dem Komfortsteuermodus bestimmt.

Insbesondere wird eine Menge von Abbildungsbeziehungen für Komfortsteuermodi und Korrekturfaktoren vordefiniert. Dadurch wird aus der Menge von Abbildungsbeziehungen dem Komfortsteuermodus ein entsprechender Korrekturfaktor zugeordnet, nachdem der Komfortsteuermodus bestimmt wurde.

S504: Fusionieren und Korrigieren der Komfort-Straßenoberflächenbeschränkungsinformationen und der Komfort-Hindernisbeschränkungsinformationen durch einen Fuzzy-Regelungsalgorithmus basierend auf dem Korrekturfaktor, um die Komfort-Trajektorienbeschränkungsinformationen zu erhalten.

In diesem Schritt wird der aus dem obigen Schritt erhaltene Korrekturfaktor dazu verwendet, die Komfort-Hindernisbeschränkungsinformationen und die Komfort-Straßenoberflächenbeschränkungsinformationen anzupassen, um den Komfortanforderungen unter verschiedenen Modi besser gerecht zu werden. Bei dem Fuzzy-Regelungsalgorithmus handelt es sich um eine Regelungsmethode, die auf Fuzzylogik und Fuzzy-Mengen basiert und in der Lage ist, Unsicherheiten und Unklarheiten effektiv zu handhaben. In einem Fahrzeugsteuersystem kann der Fuzzy-Regelungsalgorithmus endgültige Informationen über die Komfort-Beschränkung auf der Grundlage der eingegebenen Komfort-Hindernisbeschränkungsinformationen und Komfort-Straßenoberflächenbeschränkungsinformationen sowie Korrekturfaktoren ermitteln.

Zu den Eingabevariablen gehören insbesondere Komfort-Hindernisbeschränkungsinformationen, Komfort-Straßenoberflächenbeschränkungsinformationen und Korrekturfaktoren. Diese Eingabevariablen spiegeln die Komfortanforderungen unter verschiedenen Steuermodi und die Eigenschaften der Fahrumgebung des Fahrzeugs wider. In dem Fuzzy-Regelungsalgorithmus werden die Eingabevariablen auf Fuzzy-Mengen abgebildet. Anschließend werden Schlussfolgerungen und Entscheidungen durch Fuzzy-Regeln getroffen. Diese Fuzzy-Regeln sind im Voraus erstellt worden und dienen dazu, die Beziehungen zwischen verschiedenen Eingabevariablen und deren Einflüsse zu beschreiben. Ausgabevariablen, nämlich die Informationen über die Komfort-Beschränkung, werden vom Fuzzy-Regelungsalgorithmus auf der Grundlage der Eingabevariablen und Fuzzy-Regeln ermittelt. Sie spiegeln die Beschränkungsbedingungen wider, die das Fahrzeug während der Fahrt unter der Prämisse der Erfüllung der Komfortanforderungen einhalten muss.

Beispielhaft fährt ein Familienwagen mit einer Fahrgeschwindigkeit von 60 km/h (ca. 16,67 m/s) geradeaus auf einer städtischen Hauptstraße, vor ihm befindet sich jedoch eine leichte Kurve mit einem Kurvenradius von 100 Metern. Dabei ist der Komfortsteuermodus auf den Passagiermodus eingestellt, d. h., das Fahrterlebnis der Passagiere hat Priorität.

Im Passagiermodus liegt der Schwerpunkt vor allem auf dem Komfort der Passagiere, daher werden die folgenden Informationen über die Komfort-Beschränkung eingestellt: Komfort-Hindernisbeschränkungsinformationen: Der minimale Sicherheitsabstand zwischen dem Fahrzeug und einem vor ihm liegenden Hindernis (wie Straßenbankette, Bäume usw.) ist auf 5 Meter eingestellt. Komfort-Straßenoberflächenbeschränkungsinformationen: Das höchste Maß an Unebenheit der Straßenoberfläche, auf der das Fahrzeug fährt, gemessen anhand der Veränderungsrate der Beschleunigung, ist auf 0,2 m/s³ eingestellt (was auf eine relativ glatte Straßenoberfläche und eine geringe Veränderung der Beschleunigung hindeutet). Im Passagiermodus sind höhere Stabilitätsanforderungen erforderlich, weshalb ein Korrekturfaktor von 1,2 eingestellt ist, um die Komfort-Hindernisbeschränkungsinformationen und die Komfort-Straßenoberflächenbeschränkungsinformationen anzupassen.

Die korrigierten Informationen über die Komfort-Beschränkung werden in den Fuzzy-Regelungsalgorithmus eingegeben: die korrigierten Komfort-Hindernisbeschränkungsinformationen: 6 Meter, die korrigierten Komfort-Straßenoberflächenbeschränkungsinformationen: 0,24 m/s³.

Aus den eingegebenen korrigierten Informationen über die Komfort-Beschränkung und dem aktuellen Zustand des Fahrzeugs (wie Geschwindigkeit, Beschleunigung, Lenkwinkel usw.) führt der Fuzzy-Regelungsalgorithmus eine Fuzzy-Schlussfolgerung und -Entscheidung durch. Das Folgende ist ein vereinfachtes Beispiel für die Regeln der Fuzzy-Regelung:

Wenn das Fahrzeug mit hoher Geschwindigkeit fährt und eine Kurve vor ihm liegt, sollte der Sicherheitsabstand zu Hindernissen vergrößert und die Unebenheit der Straßenoberfläche reduziert werden. Wenn das Fahrzeug mit niedrigerer Geschwindigkeit fährt und die Straße vor ihm eben ist, kann der Sicherheitsabstand zu Hindernissen angemessen verringert werden, während die Ebenheit der Straßenoberfläche beibehalten wird. Auf der Grundlage dieser Fuzzy-Regeln gibt der Fuzzy-Regelungsalgorithmus endgültige Informationen über die Komfort-Beschränkung aus, die den Zustand des Fahrzeugs, die Straßenbedingungen und die Komfortanforderungen der Passagiere umfassend berücksichtigen. Es ist angenommen, dass der Fuzzy-Regelungsalgorithmus nach der Schlussfolgerung die folgenden endgültigen Informationen über die Komfort-Beschränkung ausgibt: die endgültigen Komfort-Hindernisbeschränkungsinformationen: 7 Meter (größer als 6 Meter bei korrigiertem Ergebnis, um die Sicherheit beim Durchfahren von Kurven sicherzustellen), die endgültigen Komfort-Straßenoberflächenbeschränkungsinformationen: 0,22 m/s³ (etwas kleiner als 0,24 m/s³ bei korrigiertem Ergebnis, um bei gleichzeitiger Beibehaltung der Sicherheit eine ebenere Fahroberfläche zu bieten).

Es ist darauf hinzuweisen, dass die numerischen Werte und Fuzzy-Regeln in den obigen Beispielen vereinfacht dargestellt sind. In der Praxis könnten komplexere Regeln und präzisere numerische Werte erforderlich sein, um die endgültigen Informationen über die Komfort-Beschränkung zu berechnen. Darüber hinaus müssen die konkrete Implementierung und Fehlersuche des Fuzzy-Regelungsalgorithmus in Abhängigkeit von Faktoren wie Fahrzeugtyp, Fahrumgebung und Passagieranforderungen maßgeschneidert erfolgen.

Das Verfahren zur Bestimmung von Zieltrajektorienbeschränkungen eines Fahrzeugs gemäß einem Ausführungsbeispiel der vorliegenden Anmeldung umfasst: Bestimmen von Komfort-Straßenoberflächenbeschränkungsinformationen basierend auf den Straßenoberflächeninformationen; Bestimmen von Komfort-Hindernisbeschränkungsinformationen basierend auf den Hindernisinformationen; Bestimmen eines Korrekturfaktors gemäß dem Komfortsteuermodus; sowie Fusionieren und Korrigieren der Komfort-Straßenoberflächenbeschränkungsinformationen und der Komfort-Hindernisbeschränkungsinformationen durch einen Fuzzy-Regelungsalgorithmus basierend auf dem Korrekturfaktor, um die Komfort-Trajektorienbeschränkungsinformationen zu erhalten. Dadurch, dass die Informationen über die Komfort-Beschränkung basierend auf den Straßenoberflächeninformationen und den Hindernisinformationen bestimmt werden, dass der Korrekturfaktor gemäß dem Komfortsteuermodus bestimmt wird, und dass eine Fusion und Korrektur mithilfe des Fuzzy-Regelungsalgorithmus erfolgen, wird die Fahrsicherheit erhöht, der Fahrkomfort verbessert, das Intelligenzniveau des Fahrzeugs erhöht und die Entwicklung der Technologie des intelligenten Fahrens gefördert.

Fig. 6 zeigt ein viertes schematisches Flussdiagramm des Verfahrens zur Bestimmung von Zieltrajektorienbeschränkungen eines Fahrzeugs der vorliegenden Anmeldung. Wie in Fig. 6 gezeigt, ist auf der Grundlage des obigen Ausführungsbeispiels vorgesehen, dass die mehreren Aktuatoren einen Antriebsaktuator, einen Bremsaktuator, einen Lenkaktuator und einen Aufhängungsaktuator umfassen. Dadurch kann der Schritt S201 im Einzelnen umfassen:

S601: Berechnen eines Potenzials des Antriebsaktuators basierend auf einem Straßenoberflächenhaftungskoeffizienten;
S602: Berechnen eines Potenzials des Bremsaktuators basierend auf einem Straßenoberflächenhaftungskoeffizienten;
S603: Berechnen eines Potenzials des Lenkaktuators basierend auf einem Straßenoberflächenhaftungskoeffizienten; und
S604: Berechnen eines Potenzials des Aufhängungsaktuators basierend auf einem Straßenoberflächenhaftungskoeffizienten.

Um die Zieltrajektorienbeschränkungen eines Fahrzeugs genau zu bestimmen, muss die Dynamik des Fahrwerks des Fahrzeugs berücksichtigt werden, um ein Dynamikmodell des Fahrzeugs zu erstellen.

Insbesondere handelt es sich bei dem Straßenoberflächenhaftungskoeffizienten um eine physikalische Größe zur Bewertung der Höhe einer Reibungskraft zwischen der Straßenoberfläche und einem Reifen, und er beeinflusst direkt die Beschleunigungs-, Brems-, Lenk- und Suspendierungsleistung des Fahrzeugs. Verschiedene Straßenoberflächenmaterialien (wie Asphalt, Beton, nasse und rutschige Straßenoberfläche, Straßenoberfläche mit Eis und Schnee, usw.) und verschiedene Straßenoberflächenbedingungen (wie trocken, nass, vereist, usw.) können zur Änderung des Haftungskoeffizienten führen.

Basierend auf dem Straßenoberflächenhaftungskoeffizienten kann die maximale Antriebskraft, die durch den Antriebsaktuator (wie einen Verbrennungsmotor oder einen Elektromotor) geliefert werden kann, berechnet werden. Für diese Berechnung muss eine Griffkraft des Reifens, also die Reibungskraft zwischen dem Reifen und der Straßenoberfläche, berücksichtigt werden. Wenn der Straßenoberflächenhaftungskoeffizient groß ist, ist die Griffkraft des Reifens groß und das Fahrzeug kann eine größere Antriebskraft erzielen. Wenn hingegen der Straßenoberflächenhaftungskoeffizient gering ist, wird die Griffkraft des Reifens reduziert und die Antriebskraft des Fahrzeugs kann auch begrenzt werden.

Wenn beispielhaft ein Fahrzeug mit einer Masse von 1500 kg auf einer trockenen Straßenoberfläche aus Asphalt fährt (der Haftungskoeffizient μ beträgt etwa 0,8), und die maximale Ausgangsleistung des Motors des Fahrzeugs 150 kW und der Radius des Reifens 0,3 m beträgt, wird die maximale Antriebskraft so berechnet:

$$F_{max} = μ * N = μ * m * g$$

Durch Einsetzen der obigen konkreten Werte wird errechnet, dass die maximale Antriebskraft 11772 N beträgt. Dadurch, dass die durch den Motor gelieferte Antriebskraft die maximale Haftreibungskraft zwischen dem Reifen und der Straßenoberfläche nicht überschreiten kann, beträgt somit in diesem Fall das Potenzial (also die maximale zur Verfügung stehende Antriebskraft) des Antriebsaktuators 11772 N.

Basierend auf dem Straßenoberflächenhaftungskoeffizienten wird die maximale Bremskraft, die durch den Bremsaktuator (wie einen Bremsbelag, eine Bremsscheibe oder dergleichen) geliefert werden kann, berechnet. Für die Berechnung der Bremskraft muss auch die Griffkraft des Reifens berücksichtigt werden. Bei einer Notbremsung kann es bei geringem Straßenoberflächenhaftungskoeffizienten zu Reifenschlupf kommen, was zur Verlängerung des Bremswegs und sogar zum Verlust der Bremswirkung führt. Somit muss bei der Berechnung des Potenzials des Bremsaktuators der Einfluss des Straßenoberflächenhaftungskoeffizienten auf die Bremsleistung berücksichtigt werden.

Beispielhaft kann das Potenzial des Bremsaktuators durch Berechnung der maximalen Bremskraft zwischen dem Reifen und der Straßenoberfläche dargestellt werden. Dies hängt ebenfalls von dem Straßenoberflächenhaftungskoeffizienten und der Masse des Fahrzeugs ab. Das heißt, das Potenzial des Bremsaktuators beträgt auch 11772 N, wenn dies auf die gleiche Weise wie die obige Berechnung der maximalen Antriebskraft erfolgt.

Für die Berechnung des Potenzials des Lenkaktuators (wie eines Lenkmotors oder eines hydraulischen Servolenkungssystems) muss der Einfluss des Straßenoberflächenhaftungskoeffizienten auf die Lenkstabilität des Fahrzeugs berücksichtigt werden. Auf einer Straßenoberfläche mit einem geringen Haftungskoeffizienten kann die Lenkstabilität des Fahrzeugs reduziert werden, weil die Reibungskraft zwischen dem Reifen und der Straßenoberfläche verringert ist. Dies kann dazu führen, dass das Fahrzeug bei der Lenkung ins Schleudern oder außer Kontrolle gerät. Deshalb müssen die Lenkstabilität und die Kontrollierbarkeit auf Straßenoberflächen mit verschiedenen Haftungskoeffizienten bei der Berechnung des Potenzials des Lenkaktuators ausgewertet werden.

Beispielhaft würde der Lenkradius des Fahrzeugs auf einer Straßenoberfläche mit einem geringen Haftungskoeffizienten vergrößert, weil die Seitensteifigkeit des Reifens reduziert würde. Somit handelt es sich bei dem Potenzial des Lenkaktuators selbst um das maximale erzeugbare Lenkmoment. Dies hängt üblicherweise von Parametern wie der Leistung des Lenkmotors und dem Untersetzungsverhältnis und dergleichen ab.

Die Berechnung eines Potenzials des Aufhängungsaktuators (wie eines Dämpfers, einer Feder usw.) bezieht sich auf den Einfluss des Straßenoberflächenhaftungskoeffizienten auf die Leistung des Suspendierungssystems des Fahrzeugs. Auf einer unebenen Straßenoberfläche unterliegt das Aufhängungssystem stärkeren Stößen und Schwingungen. Wenn der Straßenoberflächenhaftungskoeffizient gering ist, könnte der Reifen aufgrund des Mangels an ausreichender Griffkraft der Straßenoberfläche nicht mehr folgen, was zur Reduzierung der Leistung des Aufhängungssystems führt. Somit muss bei der Berechnung des Potenzials des Aufhängungsaktuators der Einfluss des Straßenoberflächenhaftungskoeffizienten auf die Reaktionsgeschwindigkeit und die Dämpfungswirkung des Aufhängungssystems berücksichtigt werden.

Auf einer unebenen Straßenoberfläche unterliegt das Aufhängungssystem beispielhaft stärkeren Stößen und Schwingungen. Das Potenzial des Aufhängungsaktuators kann durch seine maximale aufnehmbare Stoßenergie dargestellt werden und dies hängt vom Dämpfungskoeffizienten und Hub und anderen Parametern des Dämpfers ab.

Das Verfahren zur Bestimmung von Zieltrajektorienbeschränkungen eines Fahrzeugs gemäß einem Ausführungsbeispiel der vorliegenden Anmeldung umfasst: Berechnen eines Potenzials des Antriebsaktuators basierend auf einem Straßenoberflächenhaftungskoeffizienten; Berechnen eines Potenzials des Bremsaktuators basierend auf einem Straßenoberflächenhaftungskoeffizienten; Berechnen eines Potenzials des Lenkaktuators basierend auf einem Straßenoberflächenhaftungskoeffizienten; und Berechnen eines Potenzials des Aufhängungsaktuators basierend auf einem Straßenoberflächenhaftungskoeffizienten. Durch genaues Berechnen der Dynamik des Fahrwerks und der Potenziale der Aktuatoren des Fahrzeugs basierend auf dem Straßenoberflächenhaftungskoeffizienten werden die Stabilität und die Sicherheit der Fahrt des Fahrzeugs erheblich erhöht, der Energieverbrauch und die Emission werden optimiert und das Intelligenzniveau und die Genauigkeit der Trajektorienbeschränkung werden erhöht.

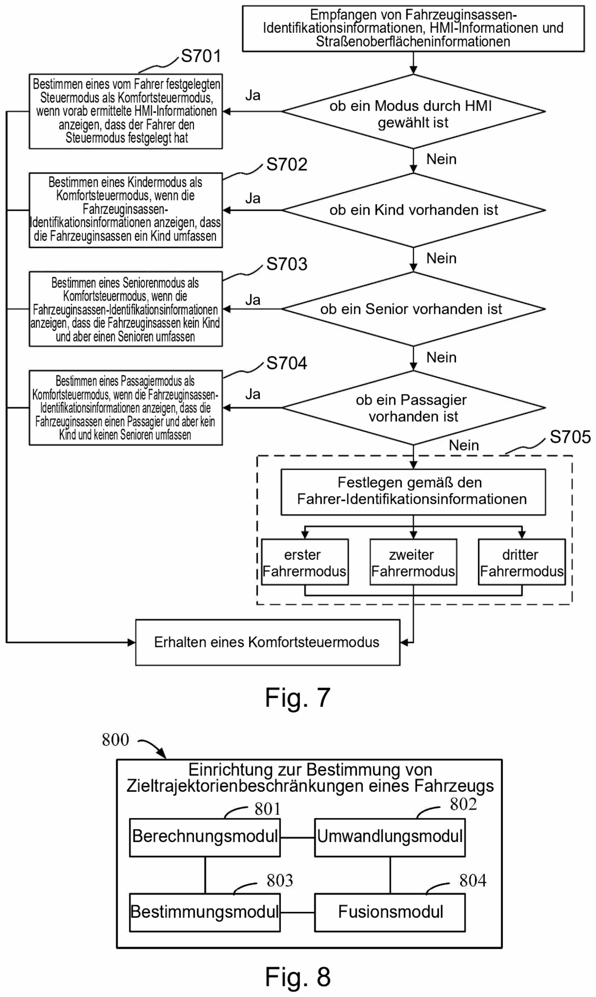

Fig. 7 zeigt ein fünftes schematisches Flussdiagramm des Verfahrens zur Bestimmung von Zieltrajektorienbeschränkungen eines Fahrzeugs der vorliegenden Anmeldung. Wie in Fig. 7 gezeigt, ist auf der Grundlage des obigen Ausführungsbeispiels vorgesehen, dass der Schritt S401 im Einzelnen umfasst:

S701: Bestimmen eines vom Fahrer festgelegten Steuermodus als Komfortsteuermodus, wenn vorab ermittelte HMI-Informationen anzeigen, dass der Fahrer den Steuermodus festgelegt hat;

S702: Bestimmen eines Kindermodus als Komfortsteuermodus, wenn die Fahrzeuginsassen-Identifikationsinformationen anzeigen, dass die Fahrzeuginsassen ein Kind umfassen;

S703: Bestimmen eines Seniorenmodus als Komfortsteuermodus, wenn die Fahrzeuginsassen-Identifikationsinformationen anzeigen, dass die Fahrzeuginsassen kein Kind und aber einen Senioren umfassen;

S704: Bestimmen eines Passagiermodus als Komfortsteuermodus, wenn die Fahrzeuginsassen-Identifikationsinformationen anzeigen, dass die Fahrzeuginsassen einen Passagier und aber kein Kind und keinen Senioren umfassen; und

S705: Bestimmen eines Fahrermodus als Komfortsteuermodus basierend auf Informationen über die Merkmale des Fahrers, wenn die Fahrzeuginsassen-Identifikationsinformationen anzeigen, dass die Fahrzeuginsassen nur den Fahrer umfassen.

Um die Trajektorienbeschränkung gemäß verschiedenen Fahrern, Fahrpräferenzen und Passagieren intelligent und automatisch anpassen zu können, kann der Fahrzeugfahrer durch HMI eine Mensch-Maschine-Interaktion mit dem Fahrzeug durchführen und durch HMI den Komfortsteuermodus des Fahrzeugs festlegen. Wenn ein elektronisches Gerät des Fahrzeugs überwacht hat, dass der Fahrer durch HMI einen Steuermodus festgelegt hat, wird der vom Fahrer festgelegte Steuermodus als Komfortsteuermodus bestimmt.

Wenn der Fahrer den Steuermodus nicht festlegt, kann er gemäß den Fahrzeuginsassen-Identifikationsinformationen intelligent angepasst werden. Insbesondere wird er automatisch in den Kindermodus gewechselt, wenn die Fahrzeuginsassen-Identifikationsinformationen auf das Vorhandensein eines Kindes im Fahrzeug hinweisen. In diesem Modus kann das Fahrzeug eine sanftere und stabilere Fahrstrategie annehmen, wie beispielsweise das Ausmaß der Beschleunigung und der Untersetzung begrenzen, um einen potenziellen Einfluss auf das Kind zu reduzieren. Gleichzeitig kann das Fahrzeug auch eine kinderspezifische Sicherheitsfunktion aktivieren, wie zum Beispiel Hinweise auf eine Kindersicherung und einen Kindersitz usw. Wenn die Fahrzeuginsassen-Identifikationsinformationen auf das Vorhandensein eines Senioren und aber das Nichtvorhandensein eines Kindes im Fahrzeug hinweisen, wird das Fahrzeug in den Seniorenmodus gewechselt. In diesem Modus konzentriert sich das Fahrzeug mehr auf die Fahrtstabilität und den Fahrtkomfort. Durch Anpassung der Aufhängungseinstellung wird beispielsweise ermöglicht, ein Gefühl von Rütteln zu reduzieren und ein sanfteres Erlebnis bei der Beschleunigung und Bremsung bereitzustellen. Wenn die Fahrzeuginsassen-Identifikationsinformationen auf das Vorhandensein eines Passagiers (ausschließlich eines Kindes und eines Senioren) im Fahrzeug hinweisen, nimmt das Fahrzeug den Passagiermodus an. In diesem Modus kann das Fahrzeug die Fahrleistung und den Fahrtkomfort ausgleichen, um sicherzustellen, dass alle Passagiere ein gutes Fahrterlebnis erhalten können. Wenn die Fahrzeuginsassen-Identifikationsinformationen ausschließlich auf das Vorhandensein des Fahrers hinweisen, bestimmt das Fahrzeug den geeignetsten Komfortsteuermodus basierend auf Informationen über die Merkmale des Fahrers, wie Alter, Geschlecht, Fahrgewohnheiten usw. Durch derartigen individuellen Steuermodus können der Komfort und die Sicherheit während dem Fahren weiter erhöht werden.

Optional kann es sich bei dem Fahrermodus um einen ersten Fahrermodus, einen zweiten Fahrermodus oder einen dritten Fahrermodus handeln. Dabei charakterisieren der erste Fahrermodus, der zweite Fahrermodus und der dritte Fahrermodus verschiedene Fahrpräferenzen.

Beispielhaft steht der erste Fahrermodus für bestimmte Präferenzen eines Fahrers, wobei die Präferenzen mehrere Aspekte wie den Fahrstil, die Einstellungen des Fahrzeugs, die Sicherheitskonfigurationen usw. abdecken könnten. Wenn beispielsweise ein Fahrer eventuell einen aggressiveren Fahrstil bevorzugt und sich an schneller Beschleunigung und Kurvenfahrt mit hoher Geschwindigkeit erfreut, können in dem ersten Fahrermodus dementsprechend die Motorreaktion, die Lenkempfindlichkeit und die Suspendierungseinstellungen angepasst werden, um die Präferenzen zu erfüllen. Gleichzeitig kann dieser Modus ferner fahrerspezifische individuelle Sicherheitseinstellungen, wie die Einstellungen der Sitzposition, des Lenkradwinkels und der Spiegel usw., enthalten, um das beste Sichtfeld und den besten Komfort sicherzustellen.

Im Vergleich zum ersten Fahrermodus könnte der zweite Fahrermodus für eine andere Art von unterschiedlichsten Fahrpräferenzen stehen. Beispielsweise könnte ein anderer Fahrer die Kraftstoffeffizienz, den Fahrtkomfort und die Fahrstabilität als wichtiger ansehen. Somit könnten im zweiten Fahrermodus die Leistungsausgabe des Motors, die Schaltlogik des Getriebes und das Suspendierungssystem angepasst werden, um ein wirtschaftliches und komfortables Fahrerlebnis zu realisieren. Darüber hinaus könnte dieser Modus ferner fahrerspezifische Sicherheitskonfigurationen umfassen, wie aktivierte oder deaktivierte Zustände von Funktionen wie automatischer Notbremsung, Spurhalteassistenz usw.

Der dritte Fahrermodus könnte für eine ausgleichende oder universale Art von Fahrpräferenzen stehen. Dieser Modus könnte darauf abzielen, allgemeine Bedürfnisse der meisten Fahrer zu erfüllen, und er ist weder zu aggressiv noch zu konservativ. Im dritten Fahrermodus könnte das Fahrzeug eine neutralere Einstellung annehmen, wie angemessene Motorreaktion, stabiles Lenkgefühl und komfortable Suspendierungsjustierung. Dadurch ist ein sicheres und komfortables Fahrerlebnis bereitgestellt, und dieser Fahrermodus ist für die Anwendung in verschiedenen Straßenverhältnissen und Fahrbedingungen geeignet.

Das Verfahrens zur Bestimmung von Zieltrajektorienbeschränkungen eines Fahrzeugs gemäß einem Ausführungsbeispiel der vorliegenden Anmeldung umfasst: Bestimmen eines vom Fahrer festgelegten Steuermodus als Komfortsteuermodus, wenn vorab ermittelte HMI-Informationen anzeigen, dass der Fahrer den Steuermodus festgelegt hat; Bestimmen eines Kindermodus als Komfortsteuermodus, wenn die Fahrzeuginsassen-Identifikationsinformationen anzeigen, dass die Fahrzeuginsassen ein Kind umfassen; Bestimmen eines Seniorenmodus als Komfortsteuermodus, wenn die Fahrzeuginsassen-Identifikationsinformationen anzeigen, dass die Fahrzeuginsassen kein Kind und aber einen Senioren umfassen; Bestimmen eines Passagiermodus als Komfortsteuermodus, wenn die Fahrzeuginsassen-Identifikationsinformationen anzeigen, dass die Fahrzeuginsassen einen Passagier und aber kein Kind und keinen Senioren umfassen; und Bestimmen eines Fahrermodus als Komfortsteuermodus basierend auf Informationen über die Merkmale des Fahrers, wenn die Fahrzeuginsassen-Identifikationsinformationen anzeigen, dass die Fahrzeuginsassen nur den Fahrer umfassen. Dadurch, dass der Komfortsteuermodus durch Integration der HMI-Informationen und der Fahrzeuginsassen-Identifikationsinformationen bestimmt ist, werden nicht nur das individuelle Erlebnis des Fahrens und der Fahrt, die Fahrtsicherheit sowie die Energienutzung und die umweltfreundliche Leistung des Fahrzeugs verbessert, sondern das Intelligenz- und Automatisierungsniveau des Fahrzeugs sowie das Benutzererlebnis und die Zufriedenheit werden auch erhöht. Darüber hinaus werden die Zieltrajektorienbeschränkungen intelligenter und flexibler.

In einer möglichen Implementierung ist in vorstehenden einzelnen Ausführungsbeispielen vorgesehen, dass Straßenoberflächeninformationen anhand eines Sensors aufgenommen werden können. Beispielsweise kann ein Infrarotsensor einen Gegenstand und ein Hindernis auf der Straßenoberfläche erkennen und Straßenoberflächenverhältnisse in Echtzeit liefern. Ein Radarsensor detektiert anhand Radarwellen die vorne liegenden Straßenoberflächenverhältnisse, einschließlich eines Hindernisses, eines Fahrzeugs und eines Fußgängers usw. Ein LIDAR generiert ein hochpräzises dreidimensionales Bild der Straßenoberfläche durch Emittieren von Lasern und durch Empfangen von zurück reflektierten Signalen.

Dies kann auch durch Machine-Vision erfolgen, wie zum Beispiel durch eine kamerabasierte Bildidentifikationstechnologie, bei der Spurlinien auf der Straßenoberfläche, Verkehrszeichen, Fußgänger und andere Fahrzeuge usw. durch Analysieren der durch die Kamera aufgenommenen Videos oder Bilder identifiziert werden. Dies erfolgt auch durch einen Deep-Learning-Algorithmus, wobei ein Modell durch eine Deep-Learning-Technologie trainiert wird, um komplexe Szenarien auf der Straßenoberfläche genauer zu identifizieren und begreifen.

Es ist auch möglich, durch ein globales Positionierungssystem (GPS) Informationen über die Position des Fahrzeugs in Echtzeit zu liefern. In Verbindung mit Kartendaten kann man über die Straßenverhältnisse und Verkehrsregeln der aktuell befindlichen Straße informiert sein. Die Kartendaten enthalten Informationen über die Geometrie, Steigung, Krümmung und dergleichen der Straße sowie über die Verkehrszeichen, das Layout von Kreuzungen usw. Durch die Kommunikation mit anderen Fahrzeugen teilen sie sich die Straßenoberflächeninformationen, wie vorne bestehende Verkehrsstauung, Unfälle oder Bauarbeiten usw. Durch die Kommunikation des Fahrzeugs mit Infrastrukturvorrichtungen (wie Verkehrsampeln, Roadside-Units usw.) werden umfassendere Straßenoberflächeninformationen ermittelt.

Optional können Straßenoberflächeninformationen umfassen, aber nicht darauf beschränkt: Straßengeometrieninformationen, Verkehrsinformationen, Hindernisinformationen, Verkehrsregelninformationen, Straßenoberflächenverhältnisseninformationen, Straßenoberflächentypen, Umweltinformationen usw.

Es ist darauf hinzuweisen, dass der Straßenoberflächenhaftungskoeffizient in den vorstehenden einzelnen Ausführungsbeispielen basierend auf den Straßenoberflächeninformationen errechnet sind. Der Straßenoberflächenhaftungskoeffizient ist beispielsweise dadurch errechnet, dass eine Reibungskraft zwischen dem Rad und der Straßenoberfläche durch einen am Rad montierten Sensor (wie einen Beschleunigungssensor, einen Kraftsensor usw.) direkt gemessen ist. Der Straßenoberflächenhaftungskoeffizient kann auch dadurch geschätzt werden, dass die durch die Kamera aufgenommenen Bilder der Straßenoberfläche analysiert werden, und dass Merkmale der Straßenoberfläche, wie das Material, die Textur und der Rutschgrad bei Nässe und dergleichen, durch ein Deep-Learning-Modell identifiziert werden. Alternativ wird der Straßenoberflächenhaftungskoeffizient einer bestimmten Strecke der Straßenoberfläche in Verbindung mit Informationen über die GPS-Position, Kartendaten und Kommunikationsdaten des Bordnetzes umfassend ausgewertet. Beispielsweise kann die Reibungseigenschaft der aktuellen Straßenoberfläche in Abhängigkeit von historischen Daten, Wetterbedingungen und Echtzeit-Verkehrsinformationen vorhergesagt werden. Noch alternativ werden die Vorgänge der Wechselwirkung zwischen dem Rad und der Straßenoberfläche durch ein Dynamikmodell des Fahrzeugs und ein Mechanikmodell des Reifens in Verbindung mit Sensordaten (wie Fahrgeschwindigkeit, Beschleunigung, Reifendruck usw.) simuliert, um somit den Straßenoberflächenhaftungskoeffizienten zu errechnen.

Die Fahrzeuginsassen-Identifikationsinformationen können Fahrer-Identifikationsinformationen und Passagier-Identifikationsinformationen umfassen. Dabei handelt es sich bei den Fahrer-Identifikationsinformationen um Arten der Fahrer und der Präferenzen, die durch ein Driver-Monitoring-System (DMS) und ein Identifikationssystem der Identität identifiziert und erhalten sind. Die Passagier-Identifikationsinformationen sind durch eine Kamera zur Identifizierung der Insassen im Fahrzeug erhalten und beziehen sich auf die Anzahl und Arten der Insassen, wie Kind, Senior, Haustier usw. Die HMI-Informationen können sich darauf beziehen, dass der Fahrer durch HMI oder einen harten Schalter oder ein Sprachsystem einen Komfortmodus eingeben und wählen kann.

Fig. 8 zeigt eine schematische Strukturdarstellung einer Einrichtung zur Bestimmung von Zieltrajektorienbeschränkungen eines Fahrzeugs der vorliegenden Anmeldung. Wie in Fig. 8 gezeigt, umfasst die Einrichtung 800 zur Bestimmung von Zieltrajektorienbeschränkungen eines Fahrzeugs:

ein Berechnungsmodul 801, das dazu dient, Potenziale mehrerer Aktuatoren des Fahrzeugs basierend auf einem vorbestimmten Straßenoberflächenhaftungskoeffizienten zu berechnen;

ein Umwandlungsmodul 802, das dazu dient, das Potenzial jedes Aktuators in das dynamische Potenzial des gesamten Fahrzeugs umzuwandeln, um dynamische Trajektorienbeschränkungsinformationen für das Fahrzeug zu erhalten;

ein Bestimmungsmodul 803, das dazu dient, Komfort-Trajektorienbeschränkungsinformationen des Fahrzeugs basierend auf vorab ermittelten Straßenoberflächen- und Hindernisinformationen sowie Fahrzeuginsassen-Identifikationsinformationen zu bestimmen;

und ein Fusionsmodul 804, das dazu dient, die dynamischen Trajektorienbeschränkungsinformationen und die Komfort-Trajektorienbeschränkungsinformationen zu fusionieren und zu verarbeiten, um Informationen über die Zieltrajektorienbeschränkungen eines Fahrzeugs zu erhalten.

In einer möglichen Implementierung wird das Bestimmungsmodul 803 im Einzelnen für Folgende verwendet:

Bestimmen eines Komfortsteuermodus gemäß den Fahrzeuginsassen-Identifikationsinformationen; und

Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus.

In einer möglichen Implementierung ist vorgesehen, dass das Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus durch das Bestimmungsmodul 803 im Einzelnen umfasst:

Bestimmen von Komfort-Straßenoberflächenbeschränkungsinformationen basierend auf den Straßenoberflächeninformationen;
Bestimmen von Komfort-Hindernisbeschränkungsinformationen basierend auf den Hindernisinformationen;
Bestimmen eines Korrekturfaktors gemäß dem Komfortsteuermodus; und
Fusionieren und Korrigieren der Komfort-Straßenoberflächenbeschränkungsinformationen und der Komfort-Hindernisbeschränkungsinformationen durch einen Fuzzy-Regelungsalgorithmus basierend auf dem Korrekturfaktor, um die Komfort-Trajektorienbeschränkungsinformationen zu erhalten.

In einer möglichen Implementierung ist vorgesehen, dass die mehreren Aktuatoren einen Antriebsaktuator, einen Bremsaktuator, einen Lenkaktuator, einen Aufhängungsaktuator umfassen, wodurch das Berechnungsmodul 801 im Einzelnen für Folgende verwendet wird:

Berechnen eines Potenzials des Antriebsaktuators basierend auf einem Straßenoberflächenhaftungskoeffizienten;
Berechnen eines Potenzials des Bremsaktuators basierend auf einem Straßenoberflächenhaftungskoeffizienten;
Berechnen eines Potenzials des Lenkaktuators basierend auf einem Straßenoberflächenhaftungskoeffizienten; und
Berechnen eines Potenzials des Aufhängungsaktuators basierend auf einem Straßenoberflächenhaftungskoeffizienten.

In einer möglichen Implementierung umfasst das Bestimmen eines Komfortsteuermodus gemäß den Fahrzeuginsassen-Identifikationsinformationen durch das Bestimmungsmodul 803 im Einzelnen:

Bestimmen eines Kindermodus als Komfortsteuermodus, wenn die Fahrzeuginsassen-Identifikationsinformationen anzeigen, dass die Fahrzeuginsassen ein Kind umfassen;
Bestimmen eines Seniorenmodus als Komfortsteuermodus, wenn die Fahrzeuginsassen-Identifikationsinformationen anzeigen, dass die Fahrzeuginsassen kein Kind und aber einen Senioren umfassen;
Bestimmen eines Passagiermodus als Komfortsteuermodus, wenn die Fahrzeuginsassen-Identifikationsinformationen anzeigen, dass die Fahrzeuginsassen einen Passagier und aber kein Kind und keinen Senioren umfassen; und

Bestimmen eines Fahrermodus als Komfortsteuermodus basierend auf Informationen über die Merkmale des Fahrers, wenn die Fahrzeuginsassen-Identifikationsinformationen anzeigen, dass die Fahrzeuginsassen nur den Fahrer umfassen. Bei dem Fahrermodus handelt es sich um einen ersten Fahrermodus, einen zweiten Fahrermodus oder einen dritten Fahrermodus. Der erste Fahrermodus, der zweite Fahrermodus und der dritte Fahrermodus charakterisieren verschiedene Fahrpräferenzen.

In einer möglichen Implementierung umfasst das Bestimmen eines Komfortsteuermodus gemäß den Fahrzeuginsassen-Identifikationsinformationen durch das Bestimmungsmodul 803 ferner:

Bestimmen eines vom Fahrer festgelegten Steuermodus als Komfortsteuermodus, wenn vorab ermittelte HMI-Informationen anzeigen, dass der Fahrer den Steuermodus festgelegt hat.

In einer möglichen Implementierung ist vorgesehen, dass die Informationen über die Zieltrajektorienbeschränkungen Maximal- und Minimalwerte der folgenden Größen in beliebiger Kombination umfassen: die Längsbeschleunigung, die Veränderungsrate der Längsbeschleunigung, die Querbeschleunigung, die Veränderungsrate der Querbeschleunigung, die Krümmung einer Zieltrajektorie, die Veränderungsrate der Krümmung einer Zieltrajektorie, die Fahrgeschwindigkeit, die Vertikalbeschleunigung der Karosserie, die Veränderungsrate der Vertikalbeschleunigung der Karosserie, die Giergeschwindigkeit, die Veränderungsrate der Giergeschwindigkeit, die Nickgeschwindigkeit, die Veränderungsrate der Nickgeschwindigkeit, die Wankgeschwindigkeit und die Veränderungsrate der Wankgeschwindigkeit.

Das obige Verfahren zur Bestimmung von Zieltrajektorienbeschränkungen eines Fahrzeugs gemäß dem obigen Verfahrensausführungsbeispiel kann durch eine Einrichtung zur Bestimmung von Zieltrajektorienbeschränkungen eines Fahrzeugs gemäß dem vorliegenden Ausführungsbeispiel durchgeführt werden, deren Umsetzungsprinzipien und technische Auswirkungen ähnlich sind und hierbei in dem vorliegenden Ausführungsbeispiel nicht mehr wiederholt werden.

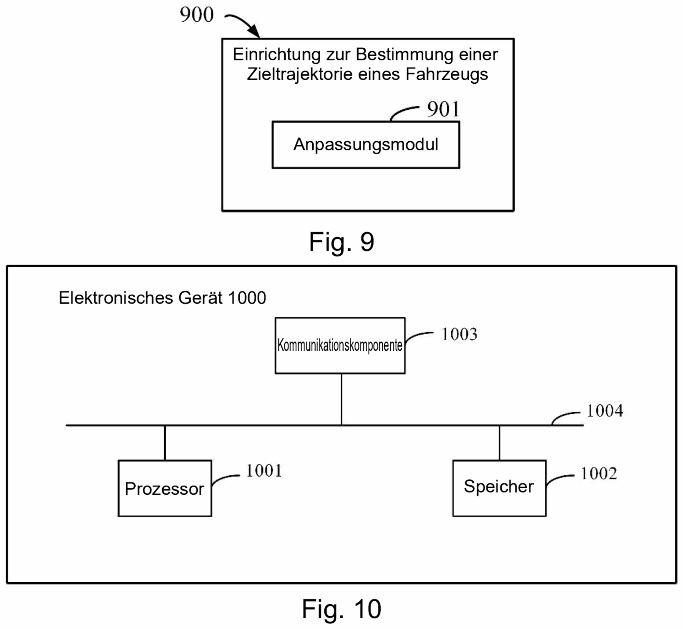

Fig. 9 zeigt eine schematische Strukturdarstellung einer Einrichtung zur Bestimmung einer Zieltrajektorie eines Fahrzeugs der vorliegenden Anmeldung. Wie in Fig. 9 gezeigt, umfasst die Einrichtung 900 zur Bestimmung einer Zieltrajektorie eines Fahrzeugs:

ein Anpassungsmodul 901, das dazu dient, eine geplante ursprüngliche Trajektorie gemäß den Informationen über die Zieltrajektorienbeschränkungen zu beschränken und anzupassen, um die Zieltrajektorie zu erhalten, wobei die Informationen über die Zieltrajektorienbeschränkungen durch ein Verfahren nach einem der vorstehenden Verfahrensausführungsbeispiele bestimmt sind.

Fig. 10 zeigt eine schematische Strukturdarstellung eines elektronischen Geräts der vorliegenden Anmeldung. Wie Fig. 10 gezeigt, umfasst das elektronische Gerät 1000 gemäß dem vorliegenden Ausführungsbeispiel: mindestens einen Prozessor 1001 und einen Speicher 1002. Optional umfasst das elektronische Gerät 1000 ferner eine Kommunikationskomponente 1003. Dabei können der Prozessor 1001, der Speicher 1002 und die Kommunikationskomponente 1003 über einen Bus 1004 miteinander verbunden sein.

Im spezifischen Umsetzungsvorgang führt der mindestens eine Prozessor 1001 computerausführbare Anweisungen, die im Speicher 1002 gespeichert sind, aus, so dass der mindestens eine Prozessor 1001 das obige Verfahren zur Bestimmung von Zieltrajektorienbeschränkungen eines Fahrzeugs und das obige Verfahren zur Bestimmung einer Zieltrajektorie eines Fahrzeugs ausführt.

Der spezifische Umsetzungsvorgang des Prozessors 1001 kann auf das obige Verfahrensausführungsbeispiel verwiesen sein, dessen Umsetzungsprinzipien und technische Auswirkungen ähnlich sind und hierbei im vorliegenden Ausführungsbeispiel nicht mehr wiederholt werden.

In dem obigen Ausführungsbeispiel ist es zu verstehen, dass der Prozessor eine zentrale Verarbeitungseinheit (Englisch: Central Processing Unit, kurz: CPU) sein kann. Alternativ kann er ein anderer universaler Prozessor, ein digitaler Signalprozessor (Englisch: Digital Signal Processor, kurz: DSP), eine anwendungsspezifische integrierte Schaltung (Englisch: Application Specific Integrated Circuit, kurz: ASIC) usw. sein. Der universale Prozessor kann ein Mikroprozessor sein oder er kann unter anderem auch ein beliebiger herkömmlicher Prozessor sein. Die Schritte des im Zusammenhang mit der vorliegenden Erfindung offenbarten Verfahrens können unmittelbar durch einen Hardware-Prozessor vollständig durchgeführt werden oder mittels einer Kombination der Hardware mit Softwaremodulen im Prozessor durchgeführt werden.

Der Speicher kann einen Hochgeschwindigkeitsspeicher (Random Access Memory, RAM) und ferner einen nichtflüchtigen Speicher (Non-volatile Memory, NVM), beispielsweise mindestens einen Magnetplattenspeicher, umfassen.

Bei dem Bus kann es sich um einen Industry-Standard-Architecture (ISA)-Bus, einen Peripheral-Component-Interconnect (PCI)-Bus oder einen Extended-Industry-Standard-Architecture (EISA)-Bus usw. handeln. Die Busse können in einen Adressenbus, einen Datenbus, einen Steuerungsbus, usw. unterteilt werden. Zum Erleichtern der Darstellung sind die Busse in den Zeichnungen der vorliegenden Anmeldung nicht auf nur einen einzigen Bus oder eine einzige Art von Bussen beschränkt.

Die vorliegende Anmeldung stellt ferner ein Computerprogrammprodukt bereit, das ein Computerprogramm umfasst, wobei das Computerprogramm bei seinem Ausführen durch einen Prozessor das obige Verfahren zur Bestimmung von Zieltrajektorienbeschränkungen eines Fahrzeugs und das obige Verfahren zur Bestimmung einer Zieltrajektorie eines Fahrzeugs implementiert.

Die vorliegende Anmeldung stellt ferner ein computerlesbares Speichermedium bereit, in dem computerausführbare Anweisungen gespeichert sind, wobei das obige Verfahren zur Bestimmung von Zieltrajektorienbeschränkungen eines Fahrzeugs und das obige Verfahren zur Bestimmung einer Zieltrajektorie eines Fahrzeugs implementiert werden, wenn die computerausführbaren Anweisungen durch einen Prozessor ausgeführt sind.

Das oben erwähnte lesbare Speichermedium kann durch ein flüchtiges oder nichtflüchtiges Speichergerät eines beliebigen Typs, wie z. B. statisches Random-Access-Memory (SRAM), Electrically-Erasable-Programmable-Read-Only-Memory (EEPROM), Erasable-Programmable-Read-Only-Memory (EPROM), Programmable-Read-Only-Memory (PROM), Read-Only-Memory (ROM), magnetischen Speicher, Flash-Speicher, Magnetdiskette oder optische Disk, oder eine Kombination davon erzielt werden. Das lesbare Speichermedium kann ein beliebiges Medium sein, das von einem universellen oder dedizierten Computer zugegriffen werden kann.

Ein beispielhaftes lesbares Speichermedium kann mit einem Prozessor gekoppelt werden, so dass der Prozessor Informationen von dem lesbaren Speichermedium auslesen und darin Informationen schreiben kann. Selbstverständlich kann das lesbare Speichermedium auch ein Bestandteil des Prozessors sein. Der Prozessor und das lesbare Speichermedium können sich in einem anwendungsspezifischen integrierten Schaltkreis (Application Specific Integrated Circuit, kurz: ASIC) befinden. Selbstverständlich können der Prozessor und das lesbare Speichermedium auch als diskrete Komponenten in dem Gerät vorliegen.

Die Aufteilung der Einheiten stellt nur eine logische Funktionsteilung dar, wobei bei der tatsächlichen Implementierung andere Aufteilungsarten verwendbar sind, wobei beispielsweise mehrere Einheiten oder Komponenten miteinander kombinierbar oder in ein weiteres System integrierbar sind, oder wobei einige Merkmale weggelassen oder nicht durchgeführt werden können. Ferner können die angezeigten oder diskutierten gegenseitigen Kopplungen oder direkten Kopplungen oder Kommunikationsverbindungen eine indirekte Kopplung oder Kommunikationsverbindung über einige Schnittstellen, Einrichtungen oder Einheiten sein, und können elektrisch und mechanisch sein oder andere Formen annehmen.

Eine als separates Element erläuterte Einheit kann physikalisch getrennt oder physikalisch nicht getrennt sein, ein als Einheit angezeigtes Element kann eine physikalische Einheit oder keine physikalische Einheit sein, nämlich kann sie sich an einem Ort befinden oder auf mehreren Netzwerkeinheiten verteilt sein. Einige oder alle Einheiten darunter können gemäß den tatsächlichen Bedürfnissen ausgewählt werden, um den Zweck der Ausgestaltungen der vorliegenden Ausführungsbeispiele zu erzielen.

Außerdem können alle Funktionseinheiten in einzelnen Ausführungsbeispielen der vorliegenden Erfindung in eine Verarbeitungseinheit integriert sein, oder jede Funktionseinheit kann allein physisch existieren, oder zwei oder mehr als zwei der genannten Funktionseinheiten können in eine Einheit integriert sein.

Wenn die Funktion in Form einer Funktionseinheit der Software realisiert wird und als separates Produkt verkauft oder verwendet wird, kann sie in einem computerlesbaren Speichermedium gespeichert werden. Basierend auf diesem Verständnis kann der Teil der technischen Ausgestaltungen der vorliegenden Erfindung, der wesentlich ist bzw. zum Stand der Technik beiträgt, oder ein Teil dieser technischen Ausgestaltungen in Form eines Softwareprodukts ausgeführt sein, das auf einem Speichermedium gespeichert ist und einige Anweisungen enthält, um ein Computergerät, das ein Personalcomputer, ein Server oder ein Netzwerkgerät usw. sein kann, zu veranlassen, alle oder einen Teil der Schritte des Verfahrens in verschiedenen Ausführungsbeispielen der vorliegenden Erfindung durchzuführen. Darüber hinaus umfasst das vorangehende Speichermedium: USB-Disk, Wechselfestplatte, Read-Only-Memory (ROM), Random-Access-Memory (RAM), Magnetplatte, optische Disk, und verschiedene Medien, die Programmcodes speichern können.

Die durchschnittlichen Fachleute auf diesem Gebiet können verstehen: Alle oder einige der Schritte für jeweilige oben beschriebene Verfahrensausführungsbeispiele können durch ein Programm über Anweisungen an relevante Hardware umgesetzt werden. Das vorangehende Programm kann in einem computerlesbaren Speichermedium gespeichert sein. Beim Ausführen des Programms werden Schritte, die die jeweiligen oben beschriebenen Verfahrensausführungsbeispiele umfassen, ausgeführt. Darüber hinaus umfasst das vorangehende Speichermedium: ROM, RAM, Diskette oder optische Disk und verschiedene andere Medien, in denen Programmcodes gespeichert werden können.

Abschließend sollte es darauf hingewiesen sein, dass für die Fachleute auf diesem Gebiet nach dem Implementieren der hierin offenbarten Erfindung unter Berücksichtigung der Beschreibung andere Ausführungsmöglichkeiten der vorliegenden Erfindung naheliegend sind. Die vorliegende Anmeldung zielt darauf ab, jegliche Varianten, Verwendungen oder adaptive Änderungen der vorliegenden Erfindung abzudecken, und solche Varianten, Verwendungen oder adaptive Änderungen folgen den allgemeinen Prinzipien der vorliegenden Erfindung und umfassen allgemein bekanntes Fachwissen oder gewöhnliches technisches Mittel, das in der vorliegenden Erfindung nicht offenbart ist, auf diesem Gebiet. Die vorliegende Erfindung ist nicht auf die oben beschriebenen und in den Figuren dargestellten genauen Strukturen beschränkt und kann auf verschiedene Weisen modifiziert bzw. verändert werden, ohne von ihrem Umfang abzuweichen. Der Umfang der vorliegenden Erfindung ist lediglich durch die beigefügten Ansprüche definiert.

**Patentansprüche**

1. Verfahren zur Bestimmung von Zieltrajektorienbeschränkungen eines Fahrzeugs, **dadurch gekennzeichnet, dass** es umfasst:

   Berechnen von Potenzialen mehrerer Aktuatoren des Fahrzeugs basierend auf einem vorbestimmten Straßenoberflächenhaftungskoeffizienten;
   Umwandeln des Potenzials jedes Aktuators in das dynamische Potenzial des gesamten Fahrzeugs, um dynamische Trajektorienbeschränkungsinformationen für das Fahrzeug zu erhalten;
   Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen; und
   Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten.

2. Verfahren nach Anspruch 1, **dadurch gekennzeichnet, dass** das Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen umfasst:

   Bestimmen eines Komfortsteuermodus gemäß den Fahrzeuginsassen-Identifikationsinformationen; und
   Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus.

3. Verfahren nach Anspruch 2, **dadurch gekennzeichnet, dass** das Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus umfasst:

   Bestimmen von Komfort-Straßenoberflächenbeschränkungsinformationen basierend auf den Straßenoberflächeninformationen;
   Bestimmen von Komfort-Hindernisbeschränkungsinformationen basierend auf den Hindernisinformationen;
   Bestimmen eines Korrekturfaktors gemäß dem Komfortsteuermodus; und
   Fusionieren und Korrigieren der Komfort-Straßenoberflächenbeschränkungsinformationen und der Komfort-Hindernisbeschränkungsinformationen durch einen Fuzzy-Regelungsalgorithmus basierend auf dem Korrekturfaktor, um die Komfort-Trajektorienbeschränkungsinformationen zu erhalten.

4. Verfahren nach Anspruch 1, **dadurch gekennzeichnet, dass** die mehreren Aktuatoren einen Antriebsaktuator, einen Bremsaktuator, einen Lenkaktuator und einen Aufhängungsaktuator umfasst, so dass das Berechnen von Potenzialen mehrerer Aktuatoren des Fahrzeugs basierend auf einem vorbestimmten Straßenoberflächenhaftungskoeffizienten umfasst:

   Berechnen eines Potenzials des Antriebsaktuators basierend auf einem Straßenoberflächenhaftungskoeffizienten;
   Berechnen eines Potenzials des Bremsaktuators basierend auf einem Straßenoberflächenhaftungskoeffizienten;
   Berechnen eines Potenzials des Lenkaktuators basierend auf einem Straßenoberflächenhaftungskoeffizienten; und
   Berechnen eines Potenzials des Aufhängungsaktuators basierend auf einem Straßenoberflächenhaftungskoeffizienten.

5. Verfahren nach Anspruch 2, **dadurch gekennzeichnet, dass** das Bestimmen eines Komfortsteuermodus gemäß den Fahrzeuginsassen-Identifikationsinformationen umfasst:

   Bestimmen eines Kindermodus als Komfortsteuermodus, wenn die Fahrzeuginsassen-Identifikationsinformationen anzeigen, dass die Fahrzeuginsassen ein Kind umfassen;
   Bestimmen eines Seniorenmodus als Komfortsteuermodus, wenn die Fahrzeuginsassen-Identifikationsinformationen anzeigen, dass die Fahrzeuginsassen kein Kind und aber einen Senioren umfassen;
   Bestimmen eines Passagiermodus als Komfortsteuermodus, wenn die Fahrzeuginsassen-Identifikationsinformationen anzeigen, dass die Fahrzeuginsassen einen Passagier und aber kein Kind und keinen Senioren umfassen; und Bestimmen eines Fahrermodus als Komfortsteuermodus basierend auf Informationen über die Merkmale des Fahrers, wenn die Fahrzeuginsassen-Identifikationsinformationen anzeigen, dass die Fahrzeuginsassen nur den Fahrer umfassen, wobei es sich bei dem Fahrermodus um einen ersten Fahrermodus, einen zweiten Fahrermodus oder einen dritten Fahrermodus handelt, und wobei der erste Fahrermodus, der zweite Fahrermodus und der dritte Fahrermodus verschiedene Fahrpräferenzen charakterisieren.

**6.** Verfahren nach Anspruch 5, **dadurch gekennzeichnet, dass** das Verfahren ferner umfasst:
Bestimmen eines vom Fahrer festgelegten Steuermodus als Komfortsteuermodus, wenn vorab ermittelte Mensch-Maschine-Interaktion/HMI-Informationen anzeigen, dass der Fahrer den Steuermodus festgelegt hat.

**7.** Verfahren nach einem der Ansprüche 1 bis 6, **dadurch gekennzeichnet, dass** die Informationen über die Zieltrajektorienbeschränkungen Maximal- und Minimalwerte der folgenden Größen in beliebiger Kombination umfassen: die Längsbeschleunigung, die Veränderungsrate der Längsbeschleunigung, die Querbeschleunigung, die Veränderungsrate der Querbeschleunigung, die Krümmung einer Zieltrajektorie, die Veränderungsrate der Krümmung einer Zieltrajektorie, die Fahrgeschwindigkeit, die Vertikalbeschleunigung der Karosserie, die Veränderungsrate der Vertikalbeschleunigung der Karosserie, die Giergeschwindigkeit, die Veränderungsrate der Giergeschwindigkeit, die Nickgeschwindigkeit, die Veränderungsrate der Nickgeschwindigkeit, die Wankgeschwindigkeit und die Veränderungsrate der Wankgeschwindigkeit.

**8.** Verfahren zur Bestimmung einer Zieltrajektorie eines Fahrzeugs, **dadurch gekennzeichnet, dass** es umfasst:
Beschränken und Anpassen einer geplanten ursprünglichen Trajektorie gemäß den Informationen über die Zieltrajektorienbeschränkungen, um die Zieltrajektorie zu erhalten, wobei die Informationen über die Zieltrajektorienbeschränkungen durch ein Verfahren nach einem der Ansprüche 1 bis 7 bestimmt sind.

**9.** Einrichtung zur Bestimmung von Zieltrajektorienbeschränkungen eines Fahrzeugs, **dadurch gekennzeichnet, dass** sie umfasst:

ein Berechnungsmodul, das dazu dient, Potenziale mehrerer Aktuatoren des Fahrzeugs basierend auf einem vorbestimmten Straßenoberflächenhaftungskoeffizienten zu berechnen;
ein Umwandlungsmodul, das dazu dient, das Potenzial jedes Aktuators in das dynamische Potenzial des gesamten Fahrzeugs umzuwandeln, um dynamische Trajektorienbeschränkungsinformationen für das Fahrzeug zu erhalten;
ein Bestimmungsmodul, das dazu dient, Komfort-Trajektorienbeschränkungsinformationen des Fahrzeugs basierend auf vorab ermittelten Straßenoberflächen- und Hindernisinformationen sowie Fahrzeuginsassen-Identifikationsinformationen zu bestimmen;
und ein Fusionsmodul, das dazu dient, die dynamischen Trajektorienbeschränkungsinformationen und die Komfort-Trajektorienbeschränkungsinformationen zu fusionieren und zu verarbeiten, um Informationen über die Zieltrajektorienbeschränkungen des Fahrzeugs zu erhalten.

**10.** Einrichtung zur Bestimmung einer Zieltrajektorie eines Fahrzeugs, **dadurch gekennzeichnet, dass** sie umfasst:
ein Anpassungsmodul, das dazu dient, eine geplante ursprüngliche Trajektorie gemäß den Informationen über die Zieltrajektorienbeschränkungen zu beschränken und anzupassen, um die Zieltrajektorie zu erhalten, wobei die Informationen über die Zieltrajektorienbeschränkungen durch ein Verfahren nach einem der Ansprüche 1 bis 7 bestimmt sind.

**11.** Elektronisches Gerät, **dadurch gekennzeichnet, dass** es umfasst: einen Prozessor und einen mit dem Prozessor in Kommunikationsverbindung stehenden Speicher,

wobei in dem Speicher computerausführbare Anweisungen gespeichert sind,
und wobei der Prozessor die computerausführbaren Anweisungen, die im Speicher gespeichert sind, ausführt, so dass der Prozessor ein Verfahren zur Bestimmung von Zieltrajektorienbeschränkungen eines Fahrzeugs nach einem der Ansprüche 1 bis 7 und ein Verfahren zur Bestimmung einer Zieltrajektorie eines Fahrzeugs nach Anspruch 8 durch den Prozessor ausführt.

**12.** Computerlesbares Speichermedium, **dadurch gekennzeichnet, dass** in dem computerlesbaren Speichermedium computerausführbare Anweisungen gespeichert sind, die bei deren Ausführen durch einen Prozessor dazu verwendet werden, ein Verfahren zur Bestimmung von Zieltrajektorienbeschränkungen eines Fahrzeugs nach einem der Ansprüche 1 bis 7 und ein Verfahren zur Bestimmung einer Zieltrajektorie eines Fahrzeugs nach Anspruch 8 zu implementieren.

Identifikationsmodul für die Straßenoberfläche und die Umgebung 101

Berechnungsmodul für das Aktuatorspotenzial 102

Berechnungsmodul für die Fahrzeugleistungsbeschränkungen 103

Fahrer-Identifikationsmodul 104

Passagier-Identifikationsmodul 105

Eingabe- und Verarbeitungsmodul über HMI 106

Komfort-Integrationsverarbeitungsmodul 107

Integrationsverarbeitungsmodul für die Trajektorienbeschränkungen 108

Signalausgabe- und Verarbeitungsmodul 109

**Fig. 1**

S201 Berechnen von Potenzialen mehrerer Aktuatoren des Fahrzeugs basierend auf einem vorbestimmten Straßenoberflächenhaftungskoeffizienten

S202 Umwandeln des Potenzials jedes Aktuators in das dynamische Potenzial des gesamten Fahrzeugs, um dynamische Trajektorienbeschränkungsinformationen für das Fahrzeug zu erhalten

S203 Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen

S204 Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten

**Fig. 2**

Berechnen von Potenzialen mehrerer Aktuatoren des Fahrzeugs basierend auf einem vorbestimmten Straßenoberflächenhaftungskoeffizienten — S301

Umwandeln des Potenzials jedes Aktuators in das dynamische Potenzial des gesamten Fahrzeugs, um dynamische Trajektorienbeschränkungsinformationen für das Fahrzeug zu erhalten — S302

Bestimmen von Komfort-Trajektorienbeschränkungsinformationen des Fahrzeugs basierend auf vorab ermittelten Straßenoberflächen- und Hindernisinformationen sowie Fahrzeuginsassen-Identifikationsinformationen — S303

Fusionieren und Verarbeiten der dynamischen Trajektorienbeschränkungsinformationen und der Komfort-Trajektorienbeschränkungsinformationen, um Informationen über die Zieltrajektorienbeschränkungen des Fahrzeugs zu erhalten — S304

Beschränken und Anpassen einer Fahrtrajektorie des Fahrzeugs gemäß den Informationen über die Zieltrajektorienbeschränkungen, um die Zieltrajektorie zu erhalten — S305

## Fig. 3

Bestimmen eines Komfortsteuermodus gemäß den Fahrzeuginsassen-Identifikationsinformationen — S401

Erhalten der Komfort-Trajektorienbeschränkungsinformationen durch eine Fuzzy-Regelungsberechnung basierend auf den Straßenoberflächeninformationen, den Hindernisinformationen und dem Komfortsteuermodus — S402

## Fig. 4

| | |
|---|---|
| Bestimmen von Komfort-Straßenoberflächenbeschränkungsinformationen basierend auf den Straßenoberflächeninformationen | S501 |

↓

| | |
|---|---|
| Bestimmen von Komfort-Hindernisbeschränkungsinformationen basierend auf den Hindernisinformationen | S502 |

↓

| | |
|---|---|
| Bestimmen eines Korrekturfaktors gemäß dem Komfortsteuermodus | S503 |

↓

| | |
|---|---|
| Fusionieren und Korrigieren der Komfort-Straßenoberflächenbeschränkungsinformationen und der Komfort-Hindernisbeschränkungsinformationen durch einen Fuzzy-Regelungsalgorithmus basierend auf dem Korrekturfaktor, um die Komfort-Trajektorienbeschränkungsinformationen zu erhalten | S504 |

## Fig. 5

| | |
|---|---|
| Berechnen eines Potenzials des Antriebsaktuators basierend auf einem Straßenoberflächenhaftungskoeffizienten | S601 |

↓

| | |
|---|---|
| Berechnen eines Potenzials des Bremsaktuators basierend auf einem Straßenoberflächenhaftungskoeffizienten | S602 |

↓

| | |
|---|---|
| Berechnen eines Potenzials des Lenkaktuators basierend auf einem Straßenoberflächenhaftungskoeffizienten | S603 |

↓

| | |
|---|---|
| Berechnen eines Potenzials des Aufhängungsaktuators basierend auf einem Straßenoberflächenhaftungskoeffizienten | S604 |

## Fig. 6

Empfangen von Fahrzeuginsassen-Identifikationsinformationen, HMI-Informationen und Straßenoberflächeninformationen

S701

Bestimmen eines vom Fahrer festgelegten Steuermodus als Komfortsteuermodus, wenn vorab ermittelte HMI-Informationen anzeigen, dass der Fahrer den Steuermodus festgelegt hat

ob ein Modus durch HMI gewählt ist — Ja

Nein

S702

Bestimmen eines Kindermodus als Komfortsteuermodus, wenn die Fahrzeuginsassen-Identifikationsinformationen anzeigen, dass die Fahrzeuginsassen ein Kind umfassen

ob ein Kind vorhanden ist — Ja

Nein

S703

Bestimmen eines Seniorenmodus als Komfortsteuermodus, wenn die Fahrzeuginsassen-Identifikationsinformationen anzeigen, dass die Fahrzeuginsassen kein Kind und aber einen Senioren umfassen

ob ein Senior vorhanden ist — Ja

Nein

S704

Bestimmen eines Passagiermodus als Komfortsteuermodus, wenn die Fahrzeuginsassen-Identifikationsinformationen anzeigen, dass die Fahrzeuginsassen einen Passagier und aber kein Kind und keinen Senioren umfassen

ob ein Passagier vorhanden ist — Ja

Nein — S705

Festlegen gemäß den Fahrer-Identifikationsinformationen

erster Fahrermodus | zweiter Fahrermodus | dritter Fahrermodus

Erhalten eines Komfortsteuermodus

Fig. 7

800

Einrichtung zur Bestimmung von Zieltrajektorienbeschränkungen eines Fahrzeugs

801 Berechnungsmodul — 802 Umwandlungsmodul

803 Bestimmungsmodul — 804 Fusionsmodul

Fig. 8

900

Einrichtung zur Bestimmung einer
Zieltrajektorie eines Fahrzeugs

901

Anpassungsmodul

## Fig. 9

Elektronisches Gerät 1000

Kommunikationskomponente 1003

1004

Prozessor 1001

Speicher 1002

## Fig. 10

Europäisches
Patentamt

European
Patent Office

Office européen
des brevets

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

EP 25 20 8460

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| Y | WO 2023/025998 A1 (PSA AUTOMOBILES SA [FR]) 2. März 2023 (2023-03-02) | 1-4,7-9, 12 | INV. B60W60/00 |
| A | * Seiten 1-2,9-13; Abbildung 2 * | 5,6 | |
| | ----- | | |
| Y | US 2023/373527 A1 (MÜNCH ECKEHARD [DE] ET AL) 23. November 2023 (2023-11-23) | 1-4,7-9, 12 | |
| A | * Absatz [0038] - Absatz [0049] * | 5,6 | |
| | ----- | | |
| A | US 2019/061761 A1 (TSUCHIYA MASAMITSU [JP] ET AL) 28. Februar 2019 (2019-02-28) * Absatz [0027]; Abbildung 3 * | 5,6 | |
| | ----- | | |
| A | DE 10 2018 203617 A1 (ZAHNRADFABRIK FRIEDRICHSHAFEN [DE]) 12. September 2019 (2019-09-12) * das ganze Dokument * | 1-9,12 | |
| | ----- | | |

**RECHERCHIERTE SACHGEBIETE (IPC)**

B60W

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

**Siehe Ergänzungsblatt C**

| Recherchenort | Abschlußdatum der Recherche | Prüfer |
|---|---|---|
| **München** | **14. März 2026** | **Stolle, Martin** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04E09)

Europäisches
Patentamt

European
Patent Office

Office européen
des brevets

**UNVOLLSTÄNDIGE RECHERCHE
ERGÄNZUNGSBLATT C**

Nummer der Anmeldung

**EP 25 20 8460**

Vollständig recherchierbare Ansprüche:
    1-9, 12

Nicht recherchierte Ansprüche:
    10, 11

Grund für die Beschränkung der Recherche:

Als Antwort auf eine Mitteilung nach Regel 62a EPÜ hat der Anmelder eine Suche der Ansprüche 1 - 8, und 9 beantragt. Entsprechend wurden die Ansprüche 10 - 11 nicht recherchiert und sind deshalb aus der Anmeldung zu entfernen.

**EP 4 737 254 A1**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-03-2026

| Im Recherchenbericht angeführtes Patentdokument | Datum der Veröffentlichung | Mitglied(er) der Patentfamilie | Datum der Veröffentlichung |
|---|---|---|---|
| WO 2023025998 A1 | 02-03-2023 | EP 4392301 A1 | 03-07-2024 |
| | | FR 3126385 A1 | 03-03-2023 |
| | | WO 2023025998 A1 | 02-03-2023 |
| US 2023373527 A1 | 23-11-2023 | CN 116018297 A | 25-04-2023 |
| | | DE 102020213604 A1 | 05-05-2022 |
| | | US 2023373527 A1 | 23-11-2023 |
| | | WO 2022089860 A1 | 05-05-2022 |
| US 2019061761 A1 | 28-02-2019 | CN 109435954 A | 08-03-2019 |
| | | JP 6714552 B2 | 24-06-2020 |
| | | JP 2019038356 A | 14-03-2019 |
| | | US 2019061761 A1 | 28-02-2019 |
| DE 102018203617 A1 | 12-09-2019 | DE 102018203617 A1 | 12-09-2019 |
| | | WO 2019170346 A1 | 12-09-2019 |

EPO FORM P0461

Für nähere Einzelheiten zu diesem Anhang : siehe Amtsblatt des Europäischen Patentamts, Nr.12/82